# EUROPEAN PATENT APPLICATION

(11) **EP 4 421 135 A1**
(43) Date of publication of application: **28.08.2024**
(21) Application number: 22883446.1
(22) Date of filing: 12.10.2022
(51) Int. Cl.: C09D 11/30, B41J 2/01, B41M 5/00, C09D 11/40

(54) **INK COMPOSITION, INK SET, RECORDING METHOD, METHOD FOR PRODUCING RECORDED MATTER, AND RECORDED MATTER**

(30) Priority: 21.10.2021 JP 2021172307
(71) Applicant: DNP Fine Chemicals Co., Ltd., Yokohama-shi, Kanagawa 226-0022 (JP)
(72) Inventor: ORIKASA Yuka, Yokohama-shi, Kanagawa 226-0022 (JP); YOSHIMORI Keishiro, Yokohama-shi, Kanagawa 226-0022 (JP); IDENOUE Satoshi, Yokohama-shi, Kanagawa 226-0022 (JP); UTAKA Kojun, Yokohama-shi, Kanagawa 226-0022 (JP); TAMURA Mitsuyoshi, Yokohama-shi, Kanagawa 226-0022 (JP)
(74) Representative: Hasegawa, Kan
(86) International application number: PCT/JP2022/038071
(87) International publication number: WO 2023/068142

(57) **Abstract**

The present invention provides an ink-jet ink composition that has excellent discharge stability even after long-term storage, and that has excellent member suitability.

This ink composition contains a resin and an organic solvent and is discharged by an ink jet method. The content of a resin-derived residual monomer is no greater than 2,000 ppm in the total amount of the ink composition.

## Description

### TECHNICAL FIELD

The present invention relates to an ink composition, an ink set, a recording method, a method for producing a recorded product, and a recorded product.

### BACKGROUND ART

Ink compositions widely used include nonaqueous ink compositions, which include an organic solvent mixture and colorants and resins dissolved or dispersed therein. Such nonaqueous ink compositions are ejected from the nozzles of an inkjet system or the like directly onto a substrate, such as a paper sheet, or onto an additional layer on the substrate and allowed to adhere to the substrate and to dry to form characters and images.

For example, Patent Document 1 discloses an oil-based ink composition for inkjet recording that contains a glycol ether dialkyl ether as a prime solvent and an acrylic resin that results from solution polymerization in a solvent of the glycol ether dialkyl ether by use of a radical polymerization initiator. Patent Document 1 indicates that such a composition contains an acrylic resin in a dissolved state, which used to be difficult in the conventional art, and thus can provide high print drying properties, high rub-resistance, and high re-solubility.

### Citation List

### Patent Document

Patent Document 1: Japanese Unexamined Patent Application, Publication No. 2007-169492

### DISCLOSURE OF THE INVENTION

### Problems to be Solved by the Invention

Meanwhile, recent advances in inkjet technology involve making denser or ultrafine nozzles and inner structures for inkjet heads and thus impose more strict requirements on inkjet ink in order to print higher definition images at higher speeds.

In some cases, for example, such an inkjet ink composition is stored in ink cartridges for an extended period of time and thus required not to change in jettability even when it is stored in an environment at low or high temperature for an extended period of time.

Such an inkjet ink composition, which is ejected from inkjet heads during the inkjet process, is also required to have good adequacy for the components of the inkjet heads.

The inventors' study has revealed that unfortunately, such an ink composition containing a resin does not always satisfy the requirements mentioned above.

It is an object of the present invention to provide an inkjet ink composition that has high ejection stability even after being stored for an extended period of time and also has high adequacy for inkjet head components.

### Means for Solving the Problems

As a result of intensive studies for solving the problem described above, the inventors have created an ink composition containing a controlled level of a resin-derived residual monomer and have completed the present invention based on findings that such an ink composition provides a solution to the problem described above. Specifically, the present invention provides the following aspects.

(1) An ink composition that is ejected by an ink-jet method including: a resin; and an organic solvent, wherein the content of a residual monomer derived from the resin is 2,000 ppm or less based on the total mass of the ink composition.
(2) The ink composition according to aspect (1), wherein the resin includes at least one polymer or copolymer selected from the group consisting of an acrylic resin, a vinyl chloride resin, a vinyl acetate resin, a polyester resin, and a polyurethane resin.
(3) The ink composition according to aspect (2), wherein the resin includes at least one of an acrylic resin or a vinyl chloride-vinyl acetate copolymer resin.
(4) The ink composition according to aspect (3), wherein the resin includes an acrylic resin.
(5) The ink composition according to aspect (4), wherein the resin further includes at least one polymer or copolymer selected from the group consisting of a vinyl chloride resin, a vinyl acetate resin, a polyester resin, and a polyurethane resin.
(6) The ink composition according to aspect (4) or (5), wherein the content of the acrylic resin is in the range of 30 mass% or more and 100 mass% or less based on the total mass of the resin in the ink composition.
(7) The ink composition according to any one of aspects (1) to (6), wherein the content of the resin is in the range of 1.0 mass% or more and 20.0 mass% or less based on the total mass of the ink composition.
(8) The ink composition according to any one of aspects (1) to (7), wherein the resin has a weight average molecular weight Mw of 10,000 or more and 60,000 or less.
(9) The ink composition according to any one of aspects (1) to (8), wherein the organic solvent includes a glycol ether solvent of Formula (1):

   Rₐ-(-O-R_{b})ₙ-O-R_{c} (1)

   wherein Rₐ and R_{c} are each independently hydrogen or an
   optionally branched alkyl group having 1 or more and 8 or less carbon atoms, R_{b} is an optionally branched alkylene group having 1 or more and 4 or less carbon atoms, and
   n is an integer of 1 or more and 6 or less.
(10) The ink composition according to aspect (9), wherein the glycol ether solvent includes a glycol monoalkyl ether of Formula (2):

   R_{d}-(-O-Rₑ)ₙ-O-H (2)

   wherein R_{d} is an optionally branched alkyl group having 1 or more and 8 or less carbon atoms, Rₑ is an optionally branched alkylene group having 1 or more and 4 or less carbon atoms, and
   n is an integer of 1 or more and 6 or less.
(11) The ink composition according to aspect (9) or (10), wherein the glycol ether solvent includes a glycol dialkyl ether of Formula (3):

   R_{f}-(-O-R_{g})ₙ-O-Rₕ (3)

   wherein R_{f} and Rₕ are each independently an optionally branched alkyl group having 1 or more and 8 or less carbon atoms, R_{g} is an optionally branched alkylene group having 1 or more and 4 or less carbon atoms, and
   n is an integer of 1 or more and 6 or less.
(12) The ink composition according to any one of aspects (1) to (11), wherein the organic solvent includes a solvent of Formula (4): 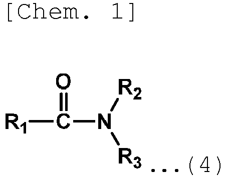 wherein R₁ is hydrogen or an alkyl group having 1 or more and 4 or less carbon atoms, and R₂ and R₃ are each independently hydrogen or an alkyl group having 1 or more and 4 or less carbon atoms.
(13) The ink composition according to any one of aspects (1) to (12), wherein the organic solvent includes a solvent of Formula (5): 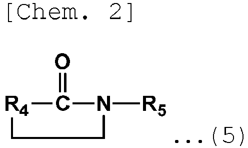 wherein R₄ is an alkylene group having 3 or more and 5 or less carbon atoms, and R₅ is hydrogen, an alkyl group having 1 or more and 4 or less carbon atoms, or an unsaturated hydrocarbon group.
(14) The ink composition according to any one of aspects (1) to (13), wherein the organic solvent includes a solvent of Formula (6): 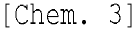 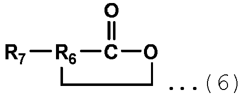 wherein R₆ is an alkylene group having 3 or more and 5 or less carbon atoms, and R₇ is hydrogen or an alkyl group having 1 or more and 4 or less carbon atoms.
(15) The ink composition according to any one of aspects (1) to (14), wherein the organic solvent includes a solvent of Formula (7): 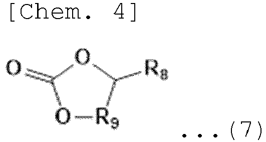 wherein R₈ is hydrogen or an alkyl group having 1 or more and 4 or less carbon atoms, and R₉ is an alkylene group having 1 or more and 3 or less carbon atoms.
(16) The ink composition according to any one of aspects (1) to (15), wherein the organic solvent includes a solvent of Formula (8): 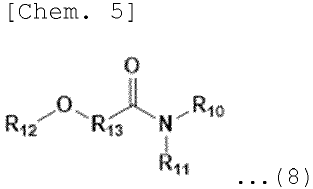 wherein R₁₀, R₁₁, and R₁₂ are each independently hydrogen or an alkyl group having 1 or more and 4 or less carbon atoms, and R₁₃ is an alkylene group having 1 or more and 4 or less carbon atoms.
(17) An ink set including the ink composition according to any one of aspects (1) to (16).
(18) A recording method including ejecting the ink composition according to any one of aspects (1) to (16) onto a substrate.
(19) A method for producing a recorded product, the method including ejecting the ink composition according to any one of aspects (1) to (16) onto a substrate.
(20) A device including a unit that ejects the ink composition according to any one of aspects (1) to (16) onto a substrate.
(21) A recorded product including: a substrate; and an ink composition layer provided on the substrate, the ink composition layer including a resin and a residual monomer derived from the resin and having a content of the residual monomer of 4.0 parts by mass or less based on 100 parts by mass of the resin.

### Effects of the Invention

In spite of containing a resin, the ink composition of the present invention has high ejection stability and high adequacy for inkjet head components.

### PREFERRED MODE FOR CARRYING OUT THE INVENTION

Hereinafter, specific embodiments of the present invention will be described in detail, which are not intended to limit the present invention at all and may be altered or modified as appropriate for implementation without departing from the gist of the present invention. In the description, the word "to" between values is intended to indicate a range of not less than one of the values and not more than the other of the values, and the expression "X:Y to A:B" is intended to mean the range between X:Y and A:B inclusive of X:Y and A:B.

### 1. Outline of the Present Invention

The present invention is directed to an ink composition that is to be ejected by an inkjet method and includes an organic solvent and a resin.

The ink composition of the present invention is characterized in that it contains a residual monomer derived from the resin and it has a content of the residual monomer of 2,000 ppm or less based on its total mass.

The term "a residual monomer derived from the resin" refers to an unreacted residue of a monomer, which is a raw material for the polymerization to produce the resin. If at least a certain amount of such a residual monomer remains in the resin, some of the residual monomer may enter and dissolve or disperse from the resin into the ink composition. The inventors' study has revealed that such dissolution or dispersion of the residual monomer will reduce the ejection stability of the ink composition and reduce the adequacy of the ink composition for inkjet head components when the ink composition is stored for an extended period of time. In particular, if the resin is a homopolymer of a single polymerizable monomer, the amount of such a residual monomer in the resin will tend to be larger than that in a copolymer, and the ink composition containing such a homopolymer resin will exhibit a significant tendency to have reduced ejection stability and reduced adequacy for inkjet head components.

Thus, the ink composition is formulated to contain the resin-derived residual monomer at a controlled concentration of 2,000 ppm or less. The ink composition formulated in that way is less likely to degrade in ejection stability even when stored for an extended period of time, and has high adequacy for inkjet head components. As used herein, the unit "ppm" indicates a mass ratio.

The content of the resin-derived residual monomer in the ink composition can be controlled to 2,000 ppm or less based on the total mass of the ink composition, for example, through a method that includes adding an additional amount of the polymerization initiator during the synthesis process, a method that includes extending the duration of the synthesis process, a reprecipitation method that includes adding, dropwise to a poor solvent, the polymer solution resulting from the synthesis process to precipitate the resin, or a method that includes dissolving, in a solvent, the polymer resulting from the synthesis process and extending the time period for which the solution is stirred.

The ink composition in which the content of the residual monomer is at least controlled to such a level is novel because it was not known before that the resin-derived residual monomer can reduce the ejection stability of the ink composition or can degrade the adequacy of the ink composition for inkjet head components.

The content of the residual monomer derived from the resin is preferably 2,000 ppm or less, more preferably 1,000 ppm or less, even more preferably 500 ppm or less, based on the total mass of the ink composition. The content of the residual monomer derived from the resin is preferably 1 ppm or more, more preferably 5 ppm or more, even more preferably 10 ppm or more. When the residual monomer content is controlled to 1 ppm or more, the resin purification process including reprecipitation and so on will be less likely to significantly increase the production cost. In that case, the ink composition can be produced with good physical properties acceptable for practical use and can be produced within a low cost range.

The content of the residual monomer derived from the resin can be measured using gas chromatography and absolute calibration curve method. For example, the measurement system for gas chromatography may be NEXIS GC-2030 (manufactured by Shimadzu Corporation), the detector for gas chromatography may be a hydrogen flame ionization detector (FID), the gas chromatography column filler may be a polyethylene glycol adsorbent, and the carrier gas may be nitrogen.

The ink composition of the present invention may be a colored ink composition containing a colorant (such as a non-white or non-black colorant or a white or black colorant), an ink composition containing a glittering pigment (flaky metallic particles) for producing metallic recorded products (objects), or a clear ink composition containing no colorant. The colorant-free clear ink composition may be an ink composition for forming a layer with a desired function. Such an ink composition may be, for example, an overcoat ink composition for forming an overcoat layer that protects the recorded product (object), a matte ink composition for matting the recorded product (object), an ink composition containing a material for forming a weather-resistant layer, such as an ultraviolet absorber or a light stabilizer, or an ink composition having a bonding ability, for example, for bonding between the substrate and a foil or any other material.

### 2. Ink Composition

Hereinafter, specific embodiments of the present invention (hereinafter referred to as "embodiments") will be described.

An embodiment is directed to an ink composition that is a nonaqueous ink composition, which does not intentionally contain water. The term "nonaqueous ink composition" means an organic solvent-containing ink composition (oil-based ink composition) that does not intentionally contain water and may unintentionally contain water derived from the air, additives, or other sources. Such an ink composition differs from any aqueous ink composition including water or a mixture of water and an organic solvent and a colorant dissolved or dispersed therein. The nonaqueous ink composition is highly quick-drying and enables easy printing (recording) on non-absorbent substrates, such as resin substrates and metal substrates.

It should be noted that the present invention may be directed to an aqueous ink composition or a nonaqueous ink composition. Meanwhile, the residual monomer derived from the resin is an organic material, such as a monomer for forming an acrylic resin or a vinyl chloride-vinyl acetate copolymer resin. Thus, the residual monomer derived from the resin (especially a monomer for forming an acrylic resin or a vinyl chloride-vinyl acetate copolymer resin) is highly soluble in the nonaqueous ink composition containing an organic solvent as a main solvent. In general, a resin contained in nonaqueous ink compositions exists in a dissolved state in contrast, for example, to a resin that forms an emulsion in aqueous ink compositions. Thus, nonaqueous ink compositions containing a resin tend to contain a larger amount of a resin-derived residual monomer than aqueous ink compositions since the residual monomer is more leachable into nonaqueous ink compositions than into aqueous ink compositions. This means that nonaqueous ink compositions containing a resin tend to more frequently raise the problem of degradation of ejection stability or degradation of adequacy for inkjet head components due to dissolution or dispersion of the resin-derived residual monomer. The nonaqueous ink composition containing the resin-derived residual monomer at a controlled concentration of 2,000 ppm or less provides a more effective solution to the problem, which would otherwise be more frequently raised by resin-containing nonaqueous ink compositions.

The ink composition according to an embodiment preferably has a water content of 5.0 mass% or less, more preferably 3.0 mass% or less, even more preferably 1.0 mass% or less, furthermore preferably 0.5 mass% or less, based on the total mass of the ink composition. Contamination with water from raw materials or from the atmosphere during the production process may degrade the storage stability of the ink composition or may cause some components in the ink composition to form solids. Keeping the water content of the ink composition as low as possible (intentionally preventing water from entering the composition) allows more effective improvement of the storage stability and other properties of the ink composition.

The ink composition according to an embodiment can form a recorded product upon drying up (volatilization) of the organic solvent. Specifically, as the volatile component(s), such as the organic solvent, dries up (volatilizes) from the ink composition, the remaining materials deposit on the surface of the substrate to form a recorded product. The ink composition according to an embodiment differs from any active energy ray-curable ink composition, which undergoes polymerization and curing on the substrate when exposed to active energy rays, such as ultraviolet rays. While the active energy ray-curable ink composition contains a polymerizable compound, the ink composition according to an embodiment, which contains an organic solvent, may or may not contain a polymerizable compound (not essential).

Hereinafter, each of the components in the ink composition according to an embodiment will be described.

### Resin

The ink composition according to an embodiment contains a resin. The resin will form a rub-resistant recorded layer (recorded product). In the ink composition, which does not intentionally contain water but contains an organic solvent, the resin exists dissolved mainly in the organic solvent. The dissolved resin is not in the form of an emulsion dispersed in water. As used herein, the term "resin" generally refers to a binder resin for forming a rub-resistant recorded layer (recorded product), which differs from a dispersant (polymer dispersant) for dispersing colorants (pigments) descried later or differs from a polymer surfactant, such as a siloxane skeleton-containing surfactant.

The resin may be any type, examples of which include acrylic resins (including copolymers such as styrene-acrylic resins), polystyrene resins, polyester resins, vinyl chloride resins, vinyl acetate resins, vinyl chloride-vinyl acetate copolymer resins, polyethylene resins, polyurethane resins, rosin modified resins, phenolic resins, terpene resins, polyamide resins, vinyltoluene-α-methylstyrene copolymers, ethylene-vinyl acetate copolymers, cellulose acetate butyrate, cellulose acetate propionate, silicone (silicon) resins, acrylamide resins, epoxy resins, polyether resins, polycarbonate resins, or copolymer resins thereof.

In particular, the resin preferably includes an acrylic resin, a vinyl chloride resin, a vinyl chloride-vinyl acetate copolymer resin, a polyester resin, or a polyurethane resin, more preferably includes at least one selected from the group consisting of an acrylic resin and a vinyl chloride-vinyl acetate copolymer resin, and even more preferably includes an acrylic resin.

The ink composition preferably contains 30 mass% or more and 100 mass% or less of an acrylic resin based on the total resin mass of the ink composition.

The acrylic resin may be any type including a (meth)acrylic ester monomer unit as a main component. The acrylic resin may be either a homopolymer of a single radically-polymerizable monomer or a copolymer of two or more selected radically polymerizable monomers. In particular, the ink composition according to an embodiment preferably contains an acrylic resin that is a homopolymer of methyl methacrylate or a copolymer of methyl methacrylate and at least one compound selected from the group consisting of butyl methacrylate, ethoxyethyl methacrylate, and benzyl methacrylate. The acrylic resin may be synthesized or obtained from commercial sources. A commercially available (meth)acrylic resin with a low residual monomer content (e.g., 4.0 mass% or less based on the total mass of the resin) may be used among products available from Rohm and Haas, such as those under the trade names PARALOID B99N, PARALOID B60, PARALOID B66, and PARALOID B82. Among these resins, a resin with a high residual monomer content (e.g., more than 4.0 mass% based on the total mass of the resin) may be purified by any of the methods mentioned above for reducing the residual monomer content before use.

The vinyl chloride resin may be either a homopolymer of a vinyl chloride monomer or a copolymer of two or more selected polymerizable monomers. The vinyl chloride copolymer resin may be, for example, a vinyl chloride-vinyl acetate copolymer resin. The vinyl chloride-vinyl acetate copolymer resin includes a product of polymerization of a vinyl chloride monomer and a vinyl acetate monomer. Examples of the vinyl chloride-vinyl acetate copolymer resin include vinyl chloride-vinyl acetate copolymers, vinyl chloride-vinyl acetate-maleic acid copolymers, vinyl chloride-vinyl acetate-vinyl alcohol copolymers, vinyl chloride-vinyl acetate-hydroxyalkyl acrylate copolymers, and any mixture thereof. The vinyl chloride resin may be synthesized or obtained from commercial sources. A commercially available vinyl chloride-vinyl acetate copolymer resin with a low residual monomer content (e.g., 4.0 parts by mass or less based on 100 parts by mass of the resin) may be used among products available from Nissin Chemical Co., Ltd, such as those under the trade names SOLBIN C, SOLBIN CL, SOLBIN CNL, SOLBIN CLL, SOLBIN CLL2, SOLBIN C5R, SOLBIN TA2, SOLBIN TA3, SOLBIN A, SOLBIN AL, SOLBIN TA5R, and SOLBIN M5. Among these resins, a resin with a high residual monomer content (e.g., more than 4.0 parts by mass based on 100 parts by mass of the resin) may be purified by any of the methods mentioned above for reducing the residual monomer content before use.

The vinyl chloride-vinyl acetate copolymer resin can be obtained by polymerization of a vinyl chloride monomer and a vinyl acetate monomer. The polymerization may be performed by a conventionally known polymerization method. The polymerization method is preferably emulsion polymerization or suspension polymerization, more preferably suspension polymerization.

The polyester resin includes at least a structural unit produced by polycondensation of an alcohol component and a carboxylic acid component. The polyester resin may include a modified polyester resin. The polyester resin may be synthesized or obtained from commercial sources. A commercially available polyester resin with a low residual monomer content (e.g., 4.0 parts by mass or less based on 100 parts by mass of the resin) may be used among products available from Toyobo Co., Ltd., such as those under the trade names VYLON 226, VYLON 270, VYLON 560, VYLON 600, VYLON 630, VYLON 660, VYLON 885, VYLON GK250, VYLON GK810, and VYLON GK890, and products available from Unitika Ltd., such as those under the trade names elitleUE-3200, elitleUE-3285, elitleUE-3320, elitleUE-9800, and elitleUE-9885. Among these resins, a resin with a high residual monomer content (e.g., more than 4.0 parts by mass based on 100 parts by mass of the resin) may be purified by any of the methods mentioned above for reducing the residual monomer content before use.

The polyurethane resin includes at least a structural unit produced by copolymerization of an alcohol component and an isocyanate component. The polyurethane resin may include a polyester-, polyether-, or caprolactone-modified polyurethane resin. The polyurethane resin may be synthesized or obtained from commercial sources. A commercially available polyurethane resin with a low residual monomer content (e.g., 4.0 parts by mass or less based on 100 parts by mass of the resin) may be used among products available from Arakawa Chemical Industries, Ltd., such as those under the trade names UREARNO KL-424, UREARNO KL-564, UREARNO KL-593, and UREARNO 3262, and products available from DIC Corporation, such as those under the trade names PANDEX 372E, PANDEX 390E, PANDEX 394E, PANDEX 304, PANDEX 305E, PANDEX P-870, PANDEX P-910, PANDEX P-895, PANDEX 4030, and PANDEX 4110. Among these resins, a resin with a high residual monomer content (e.g., more than 4.0 parts by mass based on 100 parts by mass of the resin) may be purified by any of the methods mentioned above for reducing the residual monomer content before use.

The acrylic resin, the vinyl chloride resin, the polyester resin, and the polyurethane resin may be used alone, or a mixture of two or more of these resins may be used.

The weight average molecular weight (relative molecular mass) of the resin is preferably, but not limited to, 10,000 or more, more preferably 15,000 or more. The weight average molecular weight (relative molecular mass) of the resin is preferably 60,000 or less, more preferably 50,000 or less. The relative molecular mass of the resin can be measured by conventional GPC (gel permeation chromatography).

The resin preferably has a residual monomer content of 4.0 parts by mass or less, more preferably 2.0 parts by mass or less, even more preferably 1.0 part by mass or less, furthermore preferably 0.5 parts by mass or less, based on 100 parts by mass of the resin, while the residual monomer content may depend on the resin content of the ink composition.

While the ink composition may have any resin content, the resin content of the ink composition preferably has a lower limit of 1.0 mass% or more, more preferably 2.0 mass% or more, even more preferably 3.0 mass% or more, furthermore preferably 4.0 mass% or more, based on the total mass of the ink composition. The ink composition with this feature can form a recorded layer (recorded product) with improved rub-resistance. In particular, the ink composition having a resin content of 1.0 mass% or more and having a resin-derived residual monomer content of 2,000 ppm or less can produce advantageous effects according to the present invention and form a recorded layer (recorded product) with high rub-resistance.

The upper limit of the resin content of the ink composition is preferably, but not limited to, 20.0 mass% or less, more preferably 15.0 mass% or less, even more preferably 12.0 mass% or less, based on the total mass of the ink composition. The ink composition with this feature has improved jettability. The ink composition with this feature also has a reduced content of the resin-derived residual monomer and can effectively produce advantageous effects according to the present invention.

### Organic Solvent

The ink composition according to an embodiment contains an organic solvent. The organic solvent is a liquid medium for the ink composition and has the function of dissolving (or dispersing) each of the components of the ink composition, such as the resin.

The organic solvent preferably includes a glycol ether solvent of Formula (1):

Rₐ-(-O-R_{b})ₙ-O-R_{c} (1)

In Formula (1), Rₐ and R_{c} are each independently hydrogen or an optionally branched alkyl group having 1 or more and 8 or less carbon atoms, R_{b} is an optionally branched alkylene group having 1 or more and 4 or less carbon atoms, and
n is an integer of 1 or more and 6 or less.

The glycol ether solvent may be a glycol monoalkyl ether of Formula (2) below or a glycol dialkyl ether of Formula (3) below.

R_{d}-(-O-Rₑ)ₙ-O-H (2)

In Formula (2), R_{d} is an optionally branched alkyl group having 1 or more and 8 or less carbon atoms, Rₑ is an optionally branched alkylene group having 1 or more and 4 or less carbon atoms, and n is an integer of 1 or more and 6 or less.

R_{f}-(-O-R_{g})ₙ-O-Rₕ (3)

In Formula (3), R_{f} and Rₕ are each independently an optionally branched alkyl group having 1 or more and 8 or less carbon atoms, R_{g} is an optionally branched alkylene group having 1 or more and 4 or less carbon atoms, and
n is an integer of 1 or more and 6 or less.

In particular, the acrylic resin is highly soluble in the glycol ether solvent, and the ink composition containing a certain amount of the glycol ether solvent can have effectively improved ejection stability from inkjet head nozzles.

Examples of the glycol monoalkyl ether include ethylene glycol mono-n-butyl ether, ethylene glycol mono-isobutyl ether, ethylene glycol mono-tert-butyl ether, ethylene glycol mono-2-ethylhexyl ether, diethylene glycol mono-methyl (or -ethyl, - propyl, -isopropyl, -n-butyl, -isobutyl, -tert-butyl, or -2-ethylhexyl) ether, triethylene glycol mono-methyl (or -ethyl, - propyl, -isopropyl, -n-butyl, -isobutyl, -tert-butyl, or -2-ethylhexyl) ether, tetraethylene glycol monomethyl ether, propylene glycol mono-n-butyl ether, propylene glycol mono-isobutyl ether, propylene glycol mono-tert-butyl ether, propylene glycol mono-2-ethylhexyl ether, dipropylene glycol mono-methyl (or -ethyl, -propyl, -isopropyl, -n-butyl, - isobutyl, -tert-butyl, or -2-ethylhexyl) ether, tripropylene glycol mono-methyl (or -ethyl, -propyl, -isopropyl, -n-butyl,-isobutyl, or -tert-butyl) ether, and tetrapropylene glycol mono-methyl (or -ethyl, -propyl, -isopropyl, -n-butyl, -isobutyl,-tert-butyl, or -2-ethylhexyl) ether.

Among them, preferred examples include diethylene glycol monomethyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monoethyl ether, tetraethylene glycol monopropyl ether, tetraethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, tripropylene glycol monomethyl ether, and tripropylene glycol monoethyl ether.

Examples of the glycol dialkyl ether include ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether, and tripropylene glycol ethyl methyl ether.

Among them, preferred examples include diethylene glycol dimethyl ether, diethylene glycol diethyl ether, diethylene glycol ethyl methyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, tripropylene glycol dimethyl ether, and tripropylene glycol ethyl methyl ether.

The content of the glycol ether solvent of Formula (1) in the ink composition is preferably 20 mass% or more, more preferably 50 mass% or more, even more preferably 70 mass% or more, based on the total mass of the ink composition.

The content of the glycol ether solvent of Formula (1) in the ink composition is preferably 95 mass% or less, more preferably 90 mass% or less, even more preferably 85 mass% or less, based on the total mass of the ink composition.

The content of the glycol monoalkyl ether of Formula (2) in the ink composition is preferably 1 mass% or more, more preferably 3 mass% or more, even more preferably 5 mass% or more, based on the total mass of the ink composition.

The content of the glycol monoalkyl ether of Formula (2) is preferably 30 mass% or less, more preferably 20 mass% or less, even more preferably 10 mass% or less, based on the total mass of the ink composition.

The content of the glycol dialkyl ether of Formula (3) in the ink composition is preferably 40 mass% or more, more preferably 50 mass% or more, even more preferably 60 mass% or more, based on the total mass of the ink composition.

The content of the glycol dialkyl ether of Formula (3) in the ink composition is preferably 95 mass% or less, more preferably 90 mass% or less, even more preferably 85 mass% or less, based on the total mass of the ink composition.

The organic solvent preferably includes at least one selected from the group consisting of a solvent of Formula (4), a solvent of Formula (5), and a solvent of Formula (6) instead of or in combination with the glycol ether solvent described above. 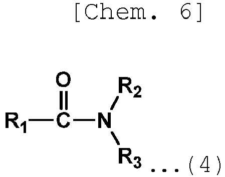 In Formula (4), R₁ is hydrogen or an alkyl group having 1 or more and 4 or less carbon atoms, and R₂ and R₃ are each independently hydrogen or an alkyl group having 1 or more and 4 or less carbon atoms.

In Formula (4), R₂ and R₃ are each preferably an alkyl group having 1 or more and 4 or less carbon atoms, more preferably an alkyl group having 2 or more and 4 or less carbon atoms. 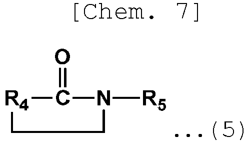 In Formula (5), R₄ is an alkylene group having 3 or more and 5 or less carbon atoms, and R₅ is hydrogen, an alkyl group having 1 or more and 4 or less carbon atoms, or an unsaturated hydrocarbon group.

The term "unsaturated hydrocarbon group" means a hydrocarbon group having at least one multiple bond, such as that in a vinyl group.

In Formula (5), R₅ is preferably hydrogen, an alkyl group having 1 or more and 3 or less carbon atoms, or an unsaturated hydrocarbon group, more preferably hydrogen, an alkyl group having 1 or more and 2 or less carbon atoms, or an unsaturated hydrocarbon group. 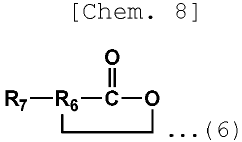 In formula (6), R₆ is an alkylene group having 3 or more and 5 or less carbon atoms, and R₇ is hydrogen or an alkyl group having 1 or more and 4 or less carbon atoms.

In particular, R₆ is preferably an alkylene group having 3 or more and 4 or less carbon atoms, more preferably an alkylene group having 3 carbon atoms. R₇ is preferably hydrogen or an alkyl group having one carbon atom, more preferably hydrogen.

The inkjet ink composition containing the alkylamide solvent, the cyclic amide solvent, or the lactone solvent shown above according to an embodiment is effectively prevented from clogging in inkjet head nozzles and can have effectively improved ejection stability from inkjet head nozzles.

Examples of the solvent of Formula (4) include N,N-diethylformamide, N,N-diethylacetamide, N,N-dipropylformamide, N,N-dibutylformamide, N,N-diethylpropanamide, N,N-dipropylpropanamide, N-ethylformamide, N-ethylacetamide, and other alkylamide solvents. In particular, to produce advantageous effects according to the present invention, the ink composition preferably contains at least one selected from the group consisting of N,N-diethylformamide, N,N-diethylpropanamide, and N,N-diethylacetamide.

Examples of the solvent of Formula (5) includes 2-pyrrolidone, N-methyl-2-pyrrolidone, N-ethyl-2-pyrrolidone, N-propyl-2-pyrrolidone, N-butyl-2-pyrrolidone, ε-caprolactam, N-methyl-ε-caprolactam, N-vinylcaprolactam, N-ethyl-ε-caprolactam, N-propyl-ε-caprolactam, N-butyl-ε-caprolactam, N-acetylcaprolactam, and other cyclic amide solvents. In particular, the ink composition preferably contains at least one selected from the group consisting of ε-caprolactam, N-methylcaprolactam, and N-vinylcaprolactam.

Examples of the solvent of Formula (6) include γ-butyrolactone, γ-valerolactone, γ-hexanolactone, γ-heptanolactone, γ-octanolactone, γ-nonalactone, γ-decalactone, γ-undecalactone, δ-valerolactone, δ-hexanolactone, δ-heptanolactone, δ-octanolactone, δ-nonalactone, δ-decalactone, δ-undecalactone, ε-caprolactone, and other lactone solvents. In particular, the ink composition preferably contains at least one selected from the group consisting of γ-butyrolactone, γ-valerolactone, and ε-caprolactone.

While the content of the solvent of Formula (4) in the ink composition may be any level, the content of the solvent of Formula (4) in the ink composition preferably has a lower limit of 1.0 mass% or more, more preferably 5.0 mass% or more, even more preferably 8.0 mass% or more, based on the total mass of the ink composition.

The upper limit of the content of the solvent of Formula (4) in the ink composition is preferably 90.0 mass% or less, more preferably 80.0 mass% or less, even more preferably 75.0 mass% or less, based on the total mass of the ink composition.

While the content of the solvent of Formula (5) in the ink composition may be any level, the content of the solvent of Formula (5) in the ink composition preferably has a lower limit of 1.0 mass% or more, more preferably 5.0 mass% or more, even more preferably 8.0 mass% or more, based on the total mass of the ink composition.

The upper limit of the content of the solvent of Formula (5) in the ink composition is preferably 90.0 mass% or less, more preferably 80.0 mass% or less, even more preferably 75.0 mass% or less, based on the total mass of the ink composition.

While the content of the solvent of Formula (6) in the ink composition may be any level, the content of the solvent of Formula (6) in the ink composition preferably has a lower limit of 1.0 mass% or more, more preferably 3.0 mass% or more, even more preferably 5.0 mass% or more, based on the total mass of the ink composition.

The upper limit of the content of the solvent of Formula (6) in the ink composition is preferably 70.0 mass% or less, more preferably 50.0 mass% or less, even more preferably 30 mass% or less, furthermore preferably 20.0 mass% or less, based on the total mass of the ink composition.

Moreover, the ink composition preferably contains at least one selected from the group consisting of a solvent of Formula (7), a solvent of Formula (8), a solvent of Formula (9), a solvent of Formula (10), and a solvent of Formula (11) instead of or in combination with the solvent of Formula (4), the solvent of Formula (5), or the solvent of Formula (6). The ink composition with this feature produces advantageous effects as shown above. 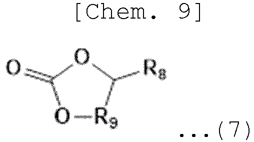 In Formula (7), R₈ is hydrogen or an alkyl group having 1 or more and 4 or less carbon atoms, and R₉ is an alkylene group having 1 or more and 3 or less carbon atoms. 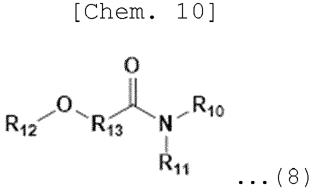 In Formula (8), R₁₀, R₁₁, and R₁₂ are each independently hydrogen or an alkyl group having 1 or more and 4 or less carbon atoms, and R₁₃ is an alkylene group having 1 or more and 4 or less carbon atoms. 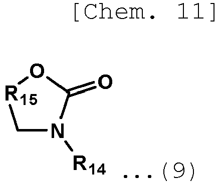 In Formula (9), R₁₄ is an optionally branched alkyl group having 1 or more and 4 or less carbon atoms or an unsaturated hydrocarbon group, and R₁₅ is an alkylene group having 1 or more and 4 or less carbon atoms. 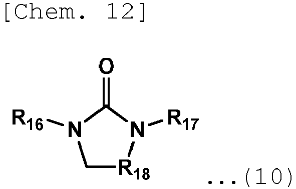 In Formula (10), R₁₆ and R₁₇ are each independently an optionally branched alkyl group having 1 or more and 4 or less carbon atoms, and R₁₈ is an alkylene group having 2 or more and 4 or less carbon atoms.

Examples of the solvent of Formula (7) include carbonate esters, such as propylene carbonate and ethylene carbonate.

Examples of the solvent of Formula (8) include 3-methoxypropanamide, 3-butoxypropanamide, 3-methoxy-N,N-dimethylpropanamide, 3-methoxy-N,N-dibutylpropanamide, 3-butoxy-N,N-dibutylpropanamide, 3-butoxy-N,N-dimethylpropanamide, N,N-dimethyl-3-methoxypropanamide, N,N-dibutyl-3-methoxypropanamide, N,N-dibutyl-3-butoxypropanamide, N,N-dimethyl-3-butoxypropanamide, and other alkoxyalkylamide solvents.

Examples of the solvent of Formula (9) include 3-methyl-2-oxazolidinone, 3-ethyl-2-oxazolidinone, N-vinylmethyloxazolidinone, and other oxazolidinone solvents.

Examples of the solvent of Formula (10) include 1,3-dimethyl-2-imidazolidinone, 1-methyl-3-ethyl-2-imidazolidinone, 1,3-diethyl-2-imidazolidinone, and other imidazolidinone solvents.

While the content of the solvent of Formula (7) in the ink composition may be any level, the content of the solvent of Formula (7) in the ink composition preferably has a lower limit of 1 mass% or more, more preferably 3 mass% or more, even more preferably 5 mass% or more, based on the total mass of the ink composition.

The upper limit of the content of the solvent of Formula (7) in the ink composition is preferably 70 mass% or less, more preferably 50 mass% or less, even more preferably 30 mass% or less, furthermore preferably 20 mass% or less, based on the total mass of the ink composition.

While the content of the solvent of Formula (8) in the ink composition may be any level, the content of the solvent of Formula (8) in the ink composition preferably has a lower limit of 1 mass% or more, more preferably 3 mass% or more, even more preferably 5 mass% or more, based on the total mass of the ink composition.

The upper limit of the content of the solvent of Formula (8) in the ink composition is preferably 70 mass% or less, more preferably 50 mass% or less, even more preferably 30 mass% or less, furthermore preferably 20 mass% or less, based on the total mass of the ink composition.

While the content of the solvent of Formula (9) in the ink composition may be any level, the content of the solvent of Formula (9) in the ink composition preferably has a lower limit of 1 mass% or more, more preferably 3 mass% or more, even more preferably 5 mass% or more, based on the total mass of the ink composition.

The upper limit of the content of the solvent of Formula (9) in the ink composition is preferably 70 mass% or less, more preferably 50 mass% or less, even more preferably 30 mass% or less, furthermore preferably 20 mass% or less, based on the total mass of the ink composition.

While the content of the solvent of Formula (10) in the ink composition may be any level, the content of the solvent of Formula (10) in the ink composition preferably has a lower limit of 1 mass% or more, more preferably 3 mass% or more, even more preferably 5 mass% or more, based on the total mass of the ink composition.

The upper limit of the content of the solvent of Formula (10) in the ink composition is preferably 70 mass% or less, more preferably 50 mass% or less, even more preferably 30 mass% or less, furthermore preferably 20 mass% or less, based on the total mass of the ink composition.

Among the solvents of Formulae (4), (5), (6), (7), (8), (9), and (10), the solvent of Formula (4), (5), (6), (7), or (8) is preferred, and the solvent of Formula (4), (5), or (6) is more preferred. Such a solvent can form an ink composition that can more effectively produce the advantageous effects mentioned above. In this regard, two or more of these organic solvents may be mixed.

The ink composition according to an embodiment may contain any additional organic solvent other than the glycol ether solvent and the solvents of Formulae (4), (5), (6), (7), (8), (9), and (10). Examples of such an additional solvent include acetate solvents, such as triethylene glycol butyl ether acetate, ethylene glycol butyl ether acetate, diethylene glycol ethyl ether acetate, diethylene glycol methyl ether acetate, diethylene glycol butyl ether acetate, propylene glycol methyl ether acetate, dipropylene glycol methyl ether acetate, 1-methoxy-2-propyl acetate, 3-methoxybutyl acetate, 2-methylbutyl acetate, 3-methoxybutyl ether acetate, and cyclohexyl acetate; C₁ to C₅ alkyl alcohols, such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monovalent alcohol solvents, such as 3-methoxy-3-methyl-1-butanol, 3-methoxy-1-propanol, 1-methoxy-2-propanol, and 3-methoxy-n-butanol; ketones or keto alcohols, such as acetone, diacetone alcohol, methyl ethyl ketone, methyl n-propyl ketone, methyl isopropyl ketone, methyl n-butyl ketone, methyl isobutyl ketone, methyl n-amyl ketone, methyl hexyl ketone, methyl isoamyl ketone, diethyl ketone, ethyl n-propyl ketone, ethyl isopropyl ketone, ethyl n-butyl ketone, ethyl isobutyl ketone, di-n-propyl ketone, diisobutyl ketone, cyclopentanone, cyclohexanone, methyl cyclohexanone, isophorone, and acetyl ketone; ethers, such as tetrahydrofuran and dioxane; oxyethylene or oxypropylene copolymers, such as polyethylene glycol and polypropylene glycol; diols, such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols, such as glycerol, trimethylolethane, trimethylolpropane, and 1,2,6-hexanetriol; tetravalent alcohols, such as meso-erythritol and pentaerythritol; alkanol amines, such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; acetic acid esters, such as methyl acetate, ethyl acetate, n-propyl acetate, isopropyl acetate, n-butyl acetate, isobutyl acetate, hexyl acetate, and octyl acetate; lactic acid esters, such as methyl lactate, ethyl lactate, butyl lactate, propyl lactate, ethylhexyl lactate, amyl lactate, and isoamyl lactate; saturated hydrocarbons, such as n-hexane, isohexane, n-nonane, isononane, dodecane, and isododecane; unsaturated hydrocarbons, such as 1-hexene, 1-heptene, and 1-octene; cyclic unsaturated hydrocarbons, such as cyclohexene, cycloheptene, cyclooctene, 1,1,3,5,7-cyclooctatetraene, and cyclododecene; aromatic hydrocarbons, such as benzene, toluene, and xylene; morpholines, such as N-methylmorpholine, N-ethylmorpholine, and N-formylmorpholine; terpene solvents; and dibasic acid esters, such as dimethyl oxalate, diethyl oxalate, dimethyl malonate, diethyl malonate, dipropyl malonate, dimethyl succinate, diethyl succinate, dimethyl glutarate, and diethyl glutarate. It is preferred to select solvents with suitable HLB values depending on the resin or the dispersant to be used in combination with them.

While the content of such an additional organic solvent in the ink composition may be any level, the content of such an additional organic solvent in the ink composition preferably has a lower limit of 10 mass% or more, more preferably 20 mass% or more, even more preferably 30 mass% or more, based on the total mass of the ink composition. The upper limit of the content of such an additional organic solvent in the ink composition is preferably 85 mass% or less, more preferably 80 mass% or less, even more preferably 75 mass% or less, based on the total mass of the ink composition.

### Surfactant

The ink composition according to an embodiment may contain a surfactant for the purpose of preventing volatilization or solidification of the ink composition in nozzles, tubes, and other device components, redissolving solidified materials, reducing surface tension to increase the wettability on recording media (substrates), or forming a coating film with improved rub-resistance.

Examples of the surfactant include polyoxyalkylene alkyl ethers, such as NONION P-208, P-210, P-213, E-202S, E-205S, E-215, K-204, K-220, S-207, S-215, A-10R, A-13P, NC-203, and NC-207 (manufactured by NOF Corporation), EMULGEN 106, 108, 707, 709, A-90, and A-60 (manufactured by Kao Corporation), FLOWLEN G-70, D-90, and TG-740W (manufactured by Kyoeisha Chemical Co., Ltd.), POEM J-0081HV (manufactured by Riken Vitamin Co., Ltd.), ADEKA TOL NP-620, NP-650, NP-660, NP-675, NP-683, and NP-686, ADEKA COL CS-141E and TS-230E (manufactured by Adeka Corporation), SORGEN 30V, 40, TW-20, and TW-80, and NOIGEN CX-100 (manufactured by DKS Co., Ltd.), fluorosurfactants preferably including fluorine-modified polymers, such as BYK-340 (manufactured by BYK Chemie Japan K.K.), silicone surfactants preferably including polyester-modified silicones and polyether-modified silicones, such as BYK-313, 315N, 322, 326, 331, 347, 348, and 3753, BYK-UV3500, 3510, 3530, and 3570 (all manufactured by BYK Chemie Japan K.K.), and acetylene glycol surfactants, such as SURFYNOL (registered trademark) 82, 104, 465, 485, and TG (all manufactured by Air Products Japan K.K.) and ORFINE (registered trademark) STG and E1010 (all manufactured by Nisshin Chemical Industry Co., Ltd.). Besides the above, the surfactant may be any of anionic, cationic, amphoteric, or nonionic surfactants.

In particular, the surfactant preferably includes a siloxane skeleton-containing surfactant. The ink composition containing a siloxane skeleton-containing surfactant according to an embodiment can form a recorded product with improved gloss. Moreover, the ink composition containing a siloxane skeleton-containing surfactant according to an embodiment is less likely to cause print blurring and can form a recorded product with improved rub-resistance.

The siloxane skeleton-containing surfactant preferably includes polyester-modified silicone or polyether-modified silicone, examples of which include BYK-313, 315N, 322, 326, 331, 347, 348, and 3753, and BYK-UV 3500, 3510, 3530, and 3570 (all manufactured by BYK Chemie Japan K.K.).

In addition to the siloxane skeleton-containing surfactant, the ink composition according to an embodiment may contain an additional surfactant other than the siloxane skeleton-containing surfactant.

While the ink composition according to an embodiment may have any surfactant content, the surfactant content of the ink composition preferably has a lower limit of 0.01 mass% or more, more preferably 0.05 mass% or more, even more preferably 0.1 mass% or more, based on the total mass of the ink composition. The surfactant content of the ink composition preferably has an upper limit of 1.0 mass% or less, more preferably 0.9 mass% or less, even more preferably 0.8 mass% or less, based on the total mass of the ink composition.

### Colorant

The ink composition according to an embodiment may be a colored ink composition containing a colorant (such as a non-white or non-black colorant or a white or black colorant), an ink composition containing a glittering pigment (flaky metallic particles) for producing metallic recorded products (objects), or a clear ink composition containing no colorant. The colorant-free clear ink composition may be an ink composition for forming a layer with a desired function. Such an ink composition may be, for example, an overcoat ink composition for forming an overcoat layer that protects the recorded product (object), a matte ink composition for matting the recorded product (object), an ink composition containing a material for forming a weather-resistant layer, such as an ultraviolet absorber or a light stabilizer, or an ink composition having a bonding ability, for example, for bonding between the substrate and a foil or any other material. These ink compositions may or may not contain a colorant.

The colorant may be any type and may be a dye or a pigment. Preferably, the colorant is a pigment (pigment colorant) for the purpose of providing recorded products with high resistance to water, light, and so on. The ink composition according to an embodiment may include any pigment, such as an organic or inorganic pigment used for conventional ink compositions. The ink composition may include a single pigment or a combination of two or more pigments.

The ink composition containing a pigment according to an embodiment may contain a dispersant or dispersing aid (pigment derivative) as described later for improving the dispersion stability of the pigment.

Examples of the organic pigment include insoluble azo pigments, soluble azo pigments, pigments derived from dyes, phthalocyanine organic pigments, quinacridone organic pigments, perylene organic pigments, perinone organic pigments, azomethine organic pigments, anthraquinone organic pigments (anthrone organic pigments), xanthene organic pigments, diketopyrrolopyrrole organic pigments, dioxazine organic pigments, nickel azo pigments, isoindolinone organic pigments, pyranthrone organic pigments, thioindigo organic pigments, condensed azo organic pigments, benzimidazolone organic pigments, quinophthalone organic pigments, isoindoline organic pigments, organic solid solution pigments, such as quinacridone solid solution pigments and perylene solid solution pigments, and other pigments such as lake pigments and carbon black.

Examples of the organic pigment, represented by color index (C.I.) numbers, include C.I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, and 214, C.I. Pigment Red 5, 7, 9, 12, 48, 49, 52, 53, 57:1, 97, 112, 122, 123, 146, 149, 150, 168, 177, 180, 184, 192, 202, 206, 208, 209, 215, 216, 217, 220, 223, 224, 226, 227, 228, 238, 240, 254, 255, 269, and 291, C.I. Pigment Orange 16, 36, 43, 51, 55, 59, 61, 64, 71, and 73, C.I. Pigment Violet 19, 23, 29, 30, 37, 40, and 50, C.I. Pigment Blue 15, 15:1, 15:3, 15:4, 15:6, 16, 22, 60, and 64, C.I. Pigment Green 7, 36, 58, 59, 62, and 63, C.I. Pigment Brown 23, 25, and 26, and C.I. Pigment Black 7.

Examples of the dye that may be used for the ink composition according to an embodiment include azo dyes, benzoquinone dyes, naphthoquinone dyes, anthraquinone dyes, cyanine dyes, squarylium dyes, croconium dyes, merocyanine dyes, stilbene dyes, diarylmethane dyes, triarylmethane dyes, fluoran dyes, spiropyran dyes, phthalocyanine dyes, indigo dyes such as indigoid, fulgide dyes, nickel complex dyes, and azulene dyes.

Examples of the inorganic pigment that may be used for the ink composition according to an embodiment include titanium oxide, barium sulfate, calcium carbonate, zinc oxide, barium carbonate, silica, talc, clay, synthetic mica, alumina, zinc oxide, lead sulfate, lead yellow, zinc yellow, rouge (red iron(III) oxide), cadmium red, ultramarine, ferric hexacyanoferrate, chromium oxide green, cobalt green, amber, titanium black, aluminum, titanium, indium, synthetic iron black, and inorganic solid solution pigments.

The ink composition according to an embodiment may contain a pigment in the form of particles with any average dispersion diameter that allows the desired color to be produced. To have good dispersibility, good dispersion stability, and sufficient coloring power, the pigment is preferably in the form of particles with a volume average particle diameter of 5 nm or more, more preferably 20 nm or more, even more preferably 30 nm or more, while the volume average particle diameter depends on the type of the pigment used. When the volume average particle diameter is at least the lower limit shown above, the ink composition will have higher light fastness. The volume average particle diameter is preferably 300 nm or less, more preferably 200 nm or less, even more preferably 150 nm or less. When the volume average particle diameter is at most the upper limit shown above and the ink composition is a jet printing ink composition, the ink composition can be ejected with higher stability onto the surfaces of substrates by inkjet method. In an embodiment, the volume average particle diameter of the pigment is the particle diameter (D50) at a cumulative volume percentage of 50%, measured under 25°C conditions using a particle size distribution measurement system (Nanotrac Wave (a particle size analyzer manufactured by MicrotracBEL Corporation)). As used herein, the term "particle diameter (D50) at a cumulative volume percentage of 50%" means the particle diameter at which the cumulative volume fraction is 50% in the particle size distribution from the smallest size. The "particle diameter (D50) at a cumulative volume percentage of 50%" may also be referred to as the "volume average particle diameter D50" or "median diameter".

The pigment content of the ink composition according to an embodiment may be any level that allows the formation of desired images and may be adjusted as appropriate. Specifically, the pigment content of the ink composition is preferably 0.05 mass% or more, more preferably 0.1 mass% or more, based on the total mass of the ink composition, while it depends on the type of the pigment. The pigment content of the ink composition is preferably 20 mass% or less, more preferably 10 mass% or less, based on the total mass of the ink composition. The pigment at a content in the range of 0.05 mass% or more and 20 mass% or less will have a good balance between dispersion stability and coloring power.

The ink composition according to an embodiment may be used to record (print) in any color, and a colorant or a combination of colorants may be selected and used depending on the desired color or colors. Any color ink may be used, such as yellow, magenta, cyan, or black ink, and any other type of ink may also be used, such as light magenta, light cyan, light black, orange, green, red, or white ink. In this case, the same type of colorants may be selected.

### Dispersant

If necessary, the ink composition containing a colorant (pigment) according to an embodiment may contain a dispersant. The dispersant may be any type used for ink compositions. The dispersant is preferably a polymer dispersant. Such a dispersant includes a polyester, polyacrylic, polyurethane, polyamine, or polycaprolactone main chain; and a polar group side chain, such as an amino, carboxyl, sulfone, or hydroxyl group. Examples of the polyacrylic dispersant that may be used include Disperbyk-2000, 2001, 2008, 2009, 2010, 2020, 2020N, 2022, 2025, 2050, 2070, 2095, 2150, 2151, 2155, 2163, and 2164, and BYKJET-9130, 9131, 9132, 9133, and 9151 (manufactured by BYK-Chemie); Efka PX 4310, PX 4320, PX 4330, PA 4401, 4402, PA 4403, 4570, 7411, 7477, PX 4700, and PX 4701 (manufactured by BASF), TREPLUS D-1200, D-1410, D-1420, and MD-1000 (manufactured by Otsuka Chemical Co., Ltd.), and FLOWLEN DOPA-15BHFS, 17HF, 22, G-700, 900, NC-500, and GW-1500 (manufactured by Kyoeisha Chemical Co., Ltd.). Examples of the polycaprolactone dispersant include AJISPUR PB821, PB822, and PB881 (manufactured by Ajinomoto Fine-Techno Co., Inc.), Hinoact KF-1000, T-6000, T-7000, T-8000, T-8000E, and T-9050 (manufactured by Kawaken Fine Chemicals Co., Ltd.), Solsperse 20000, 24000, 32000, 32500, 32550, 32600, 33000, 33500, 34000, 35200, 36000, 37500, 39000, 71000, 76400, 76500, 86000, 88000, J180, and J200 (manufactured by The Lubrizol Corporation), and TEGO Dispers 652, 655, 685, 688, and 690 (manufactured by Evonik Japan Co., Ltd.). Preferred examples of the dispersant include BYKJET-9130, 9131, 9132, 9133, and 9151, Efka PX 4310, PX 4320, PX 4330, PX 4700, and PX 4701, Solsperse 20000, 24000, 32000, 33000, 33500, 34000, 35200, 39000, 71000, 76500, 86000, 88000, J180, and J200, and TEGO Dispers 655, 685, 688, and 690. These dispersants may be used alone, or any mixture of these dispersants may be used.

While the dispersant content of the ink composition may be any level, the dispersant content of the ink composition preferably has a lower limit of 5 parts by mass or more, more preferably 15 parts by mass or more, even more preferably 20 parts by mass or more, based on 100 parts by mass of the pigment(s) in the ink composition. The dispersant content of the ink composition preferably has an upper limit of 150 parts by mass or less, more preferably 125 parts by mass or less, even more preferably 100 parts by mass or less, based on 100 parts by mass of the pigment(s) in the ink composition.

### Dispersing Aid

If necessary, the ink composition according to an embodiment may contain a dispersing aid. The dispersing aid adsorbs on the surface of the colorant (pigment) to increase the dispersion stability by means of its functional group with a higher affinity for the organic solvent and the dispersant in the ink composition. Examples of the dispersing aid that may be used include known organic pigment derivatives having a functional group, such as an acidic, basic, or neutral group, on the organic pigment residue.

### Other Components

The ink composition according to an embodiment may contain, as optional components, known additives including a stabilizer such as an antioxidant or an ultraviolet absorber, an epoxide, a polyvalent carboxylic acid, a surface modifier, a slip agent, a leveling agent (e.g., an acrylic or silicone leveling agent), an antifoaming agent, a pH adjuster, an antimicrobial agent, a preservative, an odor-control agent, a charge adjuster, and a wetting agent. Examples of the antioxidant include hindered phenol antioxidants, amine antioxidants, phosphorus antioxidants, sulfur antioxidants, and hydrazine antioxidants. Specifically, the antioxidant may be BHA (2,3-butyl-4-oxyanisole) or BHT (2,6-di-tert-butyl-p-cresol). The ultraviolet absorber may be a benzophenone compound or a benzotriazole compound. Examples of the epoxide include epoxy glycerides, epoxy fatty acid monoesters, and epoxy hexahydrophthalates, such as ADK CIZER O-130P and ADK CIZER O-180A (manufactured by Adeka Corporation). Examples of the polyvalent carboxylic acid include citric acid and maleic acid.

### 3. Viscosity and Surface Tension of the Ink Composition

The ink composition according to an embodiment may have any suitable viscosity. For example, for ink jettability and ejection stability, the ink composition according to an embodiment preferably has a viscosity of 15.0 mPa·s or less, more preferably 13.0 mPa·s or less, even more preferably 10.0 mPa·s or less, at 25°C. The ink composition according to an embodiment also preferably has a viscosity of 1.0 mPa·s or more, more preferably 2.0 mPa·s or more, even more preferably 3.0 mPa·s or more.

The ink composition according to an embodiment may have any suitable surface tension. For example, for ink jettability, ejection stability, and leveling properties on the substrate, the ink composition according to an embodiment preferably has a surface tension of 20 mN/m or more, more preferably 22 mN/m or more, even more preferably 24 mN/m or more, at 25°C. The ink composition according to an embodiment also preferably has a surface tension of 40 mN/m or less, more preferably 37 mN/m or less, even more preferably 35 mN/m or less.

### 4. Method for Producing the Ink Composition

The ink composition according to an embodiment can be produced by a method that includes mixing the organic solvent, the resin, and various materials (such as a resin and a colorant) using a paint shaker. During this process, each material may be dissolved or dispersed using zirconia beads. If necessary, a dispersion of a colorant in a specific solvent may be prepared, and then the other materials may be added to the dispersion to form the ink composition. If necessary, the ink composition according to an embodiment may be subjected to degassing treatment or other suitable treatment to adjust the dissolved oxygen and nitrogen contents to desired levels.

The process for producing the nonaqueous ink composition preferably includes previously drying the organic solvent. The previous drying of the organic solvent helps to produce a nonaqueous ink composition with a lower water content. The organic solvent may be dried by a method including drying an inert gas (e.g., nitrogen gas) under an inert gas atmosphere, such as nitrogen, and blowing the dried inert gas to the organic solvent, a method including purifying the organic solvent by distillation, a method including treating the organic solvent with a semipermeable membrane that is selectively permeable to water, or a method including selectively adsorbing water from the organic solvent onto a water-adsorbing agent.

In a case where the resin to be added is an acrylic resin with a low residual monomer content, the acrylic resin may be previously dissolved or dispersed in at least one solvent selected from the group consisting of the glycol ether solvent of Formula (1), the alkylamide solvent of Formula (4), and the cyclic amide solvent of Formula (5), and then the other materials may be dissolved or dispersed in the resulting solution or dispersion. This process allows the production of an ink composition with a very high level of viscosity stability and ejection stability.

In a case where the resin to be added is a vinyl chloride-vinyl acetate copolymer resin, the vinyl chloride-vinyl acetate copolymer resin may be previously dissolved or dispersed in at least one solvent selected from the group consisting of the alkylamide solvent of Formula (4), the cyclic amide solvent of Formula (5), and the lactone solvent of Formula (6), and then the other materials may be dissolved or dispersed in the resulting solution or dispersion. This process allows the production of an ink composition with a very high level of viscosity stability and ejection stability.

### 5. Ink Set

An embodiment is directed to an ink set including the ink composition described above. The ink composition having a resin-derived residual monomer content of 2,000 ppm or less is less likely to degrade in ejection stability and has good adequacy for inkjet head components. Thus, the ink set according to this embodiment is also less likely to degrade in ejection stability and has good adequacy for inkjet head components.

### 6. Recording Method Using the Ink Composition

An embodiment is directed to a recording method including applying the ink composition to a surface of a substrate. The ink composition having a resin-derived residual monomer content of 2,000 ppm or less is less likely to degrade in ejection stability and has good adequacy for inkjet head components. Thus, the recording method using the ink composition according to this embodiment is less likely to suffer from degradation in ejection stability, is highly adequate for inkjet head components, and can produce recorded products with high image reproducibility.

The ink composition may be ejected by any inkjet method, such as a piezo method using piezoelectric devices or a thermal method using heating elements.

### 7. Method for Producing Recorded Product

An embodiment is directed to a method for producing a recorded product, including applying the ink composition to a surface of a substrate. The ink composition having a resin-derived residual monomer content of 2,000 ppm or less is less likely to degrade in ejection stability and has good adequacy for inkjet head components. Thus, the method of this embodiment for producing a recorded product is less likely to suffer from degradation in ejection stability, is highly adequate for inkjet head components, and can produce recorded products with high image reproducibility.

### 8. Recorded Product

An embodiment is directed to a recorded product including: a substrate; and an ink composition layer provided on the substrate. The ink composition layer includes a resin and a residual monomer derived from the resin, in which the content of the residual monomer is 4.0 parts by mass or less based on 100 parts by mass of the resin. The recorded product is a product resulting from inkjet ejection of the ink composition described above onto the surface of the substrate. Since the ink composition is less likely to degrade in ejection stability and has good adequacy for inkjet head components, the recorded product according to this embodiment is obtainable with high image reproducibility.

The content of the residual monomer derived from the resin is preferably 2.0 parts by mass or less, more preferably 1.0 parts by mass or less, even more preferably 0.5 parts by mass or less, based on 100 parts by mass of the resin.

Hereinafter, each layer of the recorded product according to this embodiment will be described.

### Medium (Recording Medium)

The recording method according to an embodiment may be performed using any of various substrates including non-absorbent substrates, such as resin substrates, metal sheets, and glass, absorbent substrates, such as paper and fabrics, and surface-coated substrates, such as absorbing layer-bearing substrates.

Examples of non-absorbent substrates include polyester resins, polypropylene synthetic paper, polyolefin resins (e.g., polypropylene resins, polyethylene resins), acrylic resins, styrene resins, polycarbonate resins, ABS resins, vinyl chloride resins, polyimide resins, and other resin substrates; and metals, metal foil-coated paper, glass, synthetic rubber, and natural rubber.

Examples of absorbent substrates include woody paper, medium-quality paper, high-quality paper, synthetic paper, cotton, chemical fiber fabrics, silk, linen, woven fabrics, nonwoven fabrics, and leather.

Examples of surface-coated substrates include coated paper, art paper, cast paper, lightweight coated paper, and fine coated paper.

In particular, the substrate preferably includes a resin as a main component of its surface portion in a case where the nonaqueous ink composition is used, which does not intentionally contain water. Such a resin may be a vinyl chloride polymer, acrylic, PET, polycarbonate, PE, or PP. The substrate may also be a resin substrate supposed to form a recorded product with a recorded surface to be bonded to a film (what is called a laminating resin substrate). A particularly preferred substrate (recording medium) has a surface portion made of a hard or soft polyvinyl chloride polymer. Such a substrate (recoding medium) having a polyvinyl chloride polymer surface portion may be, for example, a polyvinyl chloride substrate (film or sheet).

### Ink Composition Layer

The recorded layer is a layer formed upon volatilization of the solvent from the ink composition, which principally forms the desired image. The ink composition having a resin-derived residual monomer content of 2,000 ppm or less is less likely to degrade in ejection stability and has good adequacy for inkjet head components. Thus, the recorded layer formed upon volatilization of the solvent from the ink composition is a product recorded with high image reproducibility.

The layer formed upon volatilization of the solvent from the ink composition may have a multilayer structure, such as a structure including: a white ink layer made from a type of the ink composition; and a color (e.g., yellow, magenta, cyan, black) ink layer made from another type of the ink composition.

### Additional Layer

The recorded product according to this embodiment may further include a layer having a desired function on the top surface of the ink composition layer. For example, such a layer may be an overcoat layer including at least one of resin or wax for the purpose of providing the recorded product with rub-resistance or gloss. Such a layer may also be a layer that includes a filler or has variations in thickness on a pixel-by-pixel basis and thus has a rough (matte) surface appearance. Such a layer may also be a weather-resistant layer including an ultraviolet absorber or a light stabilizer for the purpose of providing the recorded product with weather resistance or may be a glittering layer including a glittering pigment.

The recorded product according to this embodiment described above includes a recorded layer made from the ink composition described above. Alternatively, for example, a recorded layer may be made from a conventionally known ink composition, and the ink composition described above may be ejected onto such a recorded layer to form a layer having a desired function. Alternatively, a recorded layer may be formed using a type of the ink composition described above, and a layer having a desired function may be formed on the recorded layer using another type of the ink composition described above.

### 9. Device

An embodiment is directed to a device that includes an ink ejection unit containing the ink composition described above and ejects the ink composition onto a substrate. The device ejects the ink composition onto the surface of the substrate to produce a recorded product. Since the ink composition is less likely to degrade in ejection stability and has good adequacy for inkjet heat components, the device according to this embodiment can produce recorded products with high image reproducibility.

The device is preferably an inkjet recording device that jets the ink composition onto the substrate. The inkjet recording device, which uses inkjet method to eject the ink composition, may have a conventionally known configuration. For example, the device may have an inkjet printer configuration, such as that of Versa Art RE-640 or Versa CAMM VS300i (both manufactured by Roland DG Corporation).

For example, such an inkjet recording device may be configured as an on-carriage-type serial inkjet printer, an off-carriage-type inkjet recording device with the ink cartridge fixed outside, or a line inkjet printer that ejects the ink composition onto the recording medium (substrate) from a fixed inkjet head.

The inkjet recording device preferably includes a heating mechanism and a mechanism for fixing the substrate. In the inkjet recording device, such a heating mechanism controls the temperature of the substrate surface to dry up the ink composition landed on the substrate (recording medium) so that the solvent volatilizes from the ink composition.

Moreover, the substrate fixing mechanism allows the ink composition to dry up on the substrate being fixed and thus can prevent uneven heating of the substrate, which would otherwise occur if the substrate bent due to the heating.

In the inkjet recording device, the heating mechanism may be a pre-heater, a platen heater, an after heater, a mechanism that blows warm air onto the recorded product, or a mechanism that heats the recorded product, for example, by means of infrared rays. The heating mechanism may also include a combination of two or more of these heating mechanisms.

The substrate fixing mechanism may be a mechanism that uses a specific jig to fix the substrate or a mechanism that uses a negative pressure to suck and fix the substrate.

The inkjet recording device may include any type of inkjet head for ejecting the ink composition, such as a piezo inkjet head including piezoelectric elements or a thermal inkjet head including heating elements.

### EXAMPLES

Hereinafter, the present invention will be described in more detail with reference to examples, which are not intended to limit the present invention at all.

### 1. Preparation of Resins

### (1) Acrylic Resin

To 300 g of diethylene glycol methyl ethyl ether kept at 100°C were added dropwise 150 g of methyl methacrylate and a mixture of 50 g of butyl methacrylate and a specific amount (shown in Table 1) of tert-butyl peroxy-2-ethyl hexanoate (polymerization initiator) over 1.5 hours. After the dropwise addition was completed, 0.5 g of tert-butyl peroxy-2-ethyl hexanoate (polymerization initiator) was further added as many times as shown in Table 1 for production of synthetic resin [1], [2], [3], [4], [6], or [7]. Subsequently, the resulting mixture was allowed to react at 100°C for the period of time shown in Table 1, and then the reaction product was cooled to give a clear colorless solution of a methyl methacrylate polymer.

Subsequently, for production of synthetic resin [2], [3], [4], [5], [6], or [7], diethylene glycol methyl ethyl ether was further added to the methyl methacrylate polymer solution to form an acrylic resin solution with a solid content of 35%. For production of synthetic resin [1], the polymer solution was added dropwise to hexane, and the resulting reprecipitated product was dried to give an acrylic resin. The acrylic resin was dissolved again in diethylene glycol methyl ethyl ether to form an acrylic resin solution with a solid content of 35%.

Synthetic resin [15] was produced in the same way as synthetic resin [2], except that 200 g of methyl methacrylate was used instead of 150 g of methyl methacrylate and 50 g of butyl methacrylate.

Synthetic resin [16] was produced in the same way as synthetic resin [2], except that 200 g of butyl methacrylate was used instead of 150 g of methyl methacrylate and 50 g of butyl methacrylate.

Synthetic resin [17] was produced in the same way as synthetic resin [2], except that 100 g of methyl methacrylate and 100 g of cyclohexyl acrylate were used instead of 150 g of methyl methacrylate and 50 g of butyl methacrylate.

**[Table 1]**

| | | Residual monomer in resin (solid content 100%) | Weight average molecular weight Mw | Initiator amount | Number of times of further addition of initiator after completion of dropwise addition | Duration of reaction after completion of dropwise addition or further addition of initiator |
|---|---|---|---|---|---|---|
| | | (ppm) | | (g) | ( 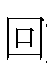 ) | (h) |
| Acrylic resin | Synthetic resin [1] | 500 | 31000 | 1.20 | 3 | 3.0 |
| Acrylic resin | Synthetic resin [2] | 2000 | 31000 | 1.20 | 3 | 3.0 |
| Acrylic resin | Synthetic resin [3] | 10000 | 30500 | 1.20 | 2 | 3.0 |
| Acrylic resin | Synthetic resin [4] | 26000 | 30400 | 1.20 | 2 | 1.0 |
| Acrylic resin | Synthetic resin [5] | 50000 | 30000 | 1.20 | 0 | 1.0 |
| Acrylic resin | Synthetic resin [6] | 2300 | 13000 | 3.60 | 3 | 3.0 |
| Acrylic resin | Synthetic resin [7] | 1900 | 59000 | 0.45 | 3 | 3.0 |
| Acrylic resin | Synthetic resin [15] | 1800 | 31000 | 1.20 | 3 | 3.0 |
| Acrylic resin | Synthetic resin [16] | 2200 | 35000 | 1.20 | 3 | 3.0 |
| Acrylic resin | Synthetic resin [17] | 2200 | 33000 | 1.20 | 3 | 3.0 |

### (2) Vinyl Chloride-Vinyl Acetate Copolymer Resin

After an autoclave equipped with a stirrer was purged with nitrogen, 100 parts by mass of deionized water, 40 parts by mass of methanol, 32 parts by mass of vinyl chloride, 5 parts by mass of vinyl acetate, 0.2 parts by mass of glycidyl methacrylate, 3.55 parts by mass of hydroxypropyl acrylate, 0.1 parts by mass of hydroxypropyl methyl cellulose (suspending agent), 0.026 parts by mass of di-2-ethylhexyl peroxydicarbonate (polymerization initiator), and 0.58 parts by mass of di-3,5,5-trimethylhexanol peroxide (polymerization initiator) were added to the autoclave. Under the nitrogen atmosphere, the materials were heated to 63°C with stirring. Immediately after the temperature reached 63°C, 48 parts by mass of vinyl chloride and a mixture of 0.6 parts by mass of glycidyl methacrylate and 10.65 parts by mass of hydroxypropyl acrylate were continuously added under pressure to the autoclave over 6 hours and 5.4 hours, respectively, during which the materials underwent copolymerization reaction. When the pressure in the autoclave reached 0.3 MPa, the release of the residual pressure and cooling were performed, and then the resulting resin slurry was removed, filtered, and dried to give a vinyl chloride copolymer resin. The resulting resin was dissolved (solid content 20%) in a mixed solvent with the same component proportion as that of the ink composition, and the resulting solution was stirred at 60°C for the period of time shown in Table 2.

**[Table 2]**

| | | Residual monomer in resin (solid content 100%) | Weight average molecular weight Mw | Dissolution time |
|---|---|---|---|---|
| | | (ppm) | | (h) |
| VC-VA resin | Synthetic resin [8] | 500 | 30000 | 8.0 |
| VC-VA resin | Synthetic resin [9] | 2000 | 31200 | 5.0 |
| VC-VA resin | Synthetic resin [10] | 12000 | 30600 | 3.0 |
| VC-VA resin | Synthetic resin [11] | 23000 | 30400 | 2.0 |
| VC-VA resin | Synthetic resin [12] | 68000 | 29800 | 1.0 |

In Table 2, "VC-VA resin" means vinyl chloride-vinyl acetate copolymer resin.

### (3) Polyester Resin

To a round bottom flask were added 104 parts by mass of terephthalic acid, 104 parts by mass of isophthalic acid, 79 parts by mass of ethylene glycol, 89 parts by mass of neopentyl glycol, and 0.1 parts by mass of tetrabutyl titanate. The mixture was gradually heated to 240°C over 4 hours and then subjected to esterification reaction while the distillate was taken out of the system. After the esterification reaction was completed, the reaction product was subjected to initial polymerization while the pressure and the temperature were reduced to 10 mmHg and raised to 250°C, respectively, over 30 minutes. Subsequently, the reaction product was subjected to late-stage polymerization at most at 1 mmHg for 1 hour to form a polyester resin. Diethylene glycol methyl ethyl ether was added to the resulting polyester resin to form a polyester resin solution with a solid content of 35%.

**[Table 3]**

| | | Residual monomer in resin (solid content 100%) | Weight average molecular weight Mw |
|---|---|---|---|
| | | (ppm) | |
| Polyester resin | Synthetic resin [13] | 3400 | 31300 |

### (4) Polyurethane Resin

To a round bottom flask were added 192.5 parts by mass of polycarbonate diol (PLACCEL CD-220 manufactured by Daicel Corporation), 41.6 parts by mass of isophorone diisocyanate (IPDI manufactured by Evonik Industries), and 100 parts by mass of γ-butyrolactone (GBL), and mixed uniformly. Subsequently, a liquid mixture of 0.01 parts by mass of T100BHJ (catalyst) and 0.09 parts by mass of γ-butyrolactone (GBL) was added to the round bottom flask, and the resulting mixture was allowed to react at 75°C for 3 hours to produce a prepolymer with isocyanate end groups. To the product was added 250 parts by mass of γ-butyrolactone (GBL) and dissolved uniformly. Subsequently, a chain extender solution, which was a solution of 12 parts by mass of 3-aminomethyl-3,5,5-trimethylcyclohexylamine (IPD manufactured by Evonik Industries) in 100 parts by mass of γ-butyrolactone (GBL), was added to the resulting mixture and then further stirred at 60°C for 40 minutes. Subsequently, a reaction terminator, which was a solution of 3.8 parts by mass of monoisopropanolamine (MIPA manufactured by Daicel Corporation) in 50 parts by mass of γ-butyrolactone (GBL), was added to the mixture. Finally, 250 parts by mass of γ-butyrolactone (GBL) was added to the resulting mixture to form a polyurethane solution with a solid content of 25.0%.

**[Table 4]**

| | | Residual monomer in resin (solid content 100%) | Weight average molecular weight Mw |
|---|---|---|---|
| | | (ppm) | |
| Polyurethane resin | Synthetic resin [14] | 2900 | 33000 |

The resulting resin solution was then analyzed by gas chromatography to determine the resin-derived residual monomer content. The gas chromatography was performed using an analyzer NEXIS GC-2030 (manufactured by Shimadzu Corporation), a hydrogen flame ionization detector (FID), a glass column filled with a polyethylene glycol adsorbent (filler), and nitrogen carrier gas. The measurement sample was a dilution of 0.5 g of the resin sample in 10 mL of methyl ethyl ketone (MEK). The monomers were quantified by the absolute calibration curve method, and all monomers used for the synthesis of each of the synthetic resins were used as standard samples. The residual monomer contents of the resins (100% solid content) were calculated from the measurements, which are shown in Tables 1 to 4.

### 2. Preparation of Ink Compositions

Ink compositions of examples and comparative examples were each prepared by mixing the organic solvents, the resin(s), the surface conditioner (surfactant), the dispersant, and the pigment in the proportion shown in the table below. Specifically, a pigment dispersion containing the pigment dispersed with the dispersant in the organic solvent was prepared in a paint shaker using zirconia beads, which was followed by the preparation of an ink composition including the components in the proportion shown in the table below. The units are % by mass.

### 3. Evaluation

### (1) Viscosity Stability (Heated Storage)

The ink compositions of the examples and the comparative examples were evaluated for viscosity stability (heated storage). Specifically, the ink compositions of the examples and the comparative examples were measured for initial viscosity (Va). Approximately 25 ml of a sample of each of the ink compositions of the examples and the comparative examples was then sealed in a 30 ml-volume brown glass bottle and stored at 60°C for 42 days. After the storage test, the sample was measured again for viscosity (post-storage viscosity (Vb)) under the same conditions. The rate of change in viscosity {(Vb - Va)/Va} × 100 (in units of %) was calculated from the initial viscosity (Va) and the post-storage viscosity (Vb). The viscosity of the ink composition was measured under 25°C conditions using a falling-ball viscometer (AMVn manufactured by Anton Paar). In the tables, the rating is shown in the "Viscosity stability (heated storage)" column. Evaluation Criteria
Rating 5: The rate of change in viscosity is less than 3%. Rating 4: The rate of change in viscosity is 3% or more and less than 5%. Rating 3: The rate of change in viscosity is 5% or more and less than 8%. Rating 2: The rate of change in viscosity is 8% or more and less than 10%. Rating 1: The rate of change in viscosity is 10% or more.

### (2) Viscosity Stability (Heat Cycles)

The ink compositions of the examples and the comparative examples were evaluated for viscosity stability (heat cycles). Specifically, the initial viscosity (Va) and the post-storage viscosity (Vb) were determined and the rate (in units of %) of change in viscosity {(Vb - Va)/Va} × 100 was calculated as in the evaluation of viscosity stability (heated storage) described above, except that the storage conditions were changed to 4 cycles of heating from room temperature to 60°C at a rate of temperature increase of 5°C/min, storing at 60°C for 3 days, cooling from 60°C to -20°C at a rate of temperature decrease of -5°C/min, storing at -20°C for 3 days, and heating from -20°C to room temperature at a rate of temperature increase of 5°C/min. The evaluation criteria were the same as those in the evaluation of the viscosity stability (heated storage) described above. In the table, the rating is shown in the "Viscosity stability (heat cycles)" column.

### (3) Ejection Stability (Heated Storage)

The ink compositions of the examples and the comparative examples were evaluated for ejection stability. The ink compositions of the examples and the comparative examples were evaluated for ejection stability. Specifically, after heated storage (storage at 60°C for 42 days), each of the ink compositions of the examples and the comparative examples was loaded in an inkjet printer (Versa CAMM VS300i manufactured by Roland DG Corporation) and used to print fine lines on a recoding medium (an adhesive polyvinyl chloride film (IMAGin JT5829R manufactured by MACtac)) at a substrate surface temperature of 40°C in the bidirectional high-speed printing mode (360 × 360 dpi). The printed fine lines were observed with naked eyes and a loupe (×25) for the presence or absence of dot missing, misdirection, and ink splattering and evaluated as follows (in the tables, the rating is shown in the "Ejection stability (heated storage)" column). Evaluation Criteria Rating 5: With naked eyes and the loupe, the fine lines are observed to be correctly reproduced. Rating 4: With naked eyes, the fine lines are observed to be correctly reproduced. Rating 3: The fine lines are observed to have slight bending. Rating 2: Landing position misalignment and bending are observed. Rating 1: The fine lines are not reproduced because of severe misalignment of landing position.

### (4) Ejection Stability (Heat Cycles)

The ink compositions of the examples and the comparative examples were evaluated for ejection stability. Specifically, the ejection stability was evaluated according to the same criteria under the same conditions as in the evaluation of ejection stability (heated storage) described above, except that the storage conditions were changed to 4 cycles of heating from room temperature to 60°C at a rate of temperature increase of 5°C/min, storing at 60°C for 3 days, cooling from 60°C to -20°C at a rate of temperature decrease of -5°C/min, storing at -20°C for 3 days, and heating from -20°C to room temperature at a rate of temperature increase of 5°C/min. In the tables, the rating is shown in the "Ejection stability (heat cycles)" column.

### (5) Test 1 of Adequacy for Printer Component

The ink compositions of the examples and the comparative examples were evaluated for adequacy for a component (cured adhesive). Specifically, an epoxy adhesive (two-component curing epoxy adhesive No. 1500 manufactured by Cemedine Co., Ltd.) for use to bond inkjet head components was dried at 60°C for 1 day to form a cured product, and 0.2 g of the cured product was subjected to an immersion test in which it was immersed in each of the ink compositions of the examples and the comparative examples and allowed to stand at 60°C for 1 week. After the test, it was determined how much the weight of the cured product changed (in the tables, the evaluation result is shown in the "Test 1 of adequacy for printer component" column). Evaluation Criteria
Rating 5: The rate of change in weight is less than 3% with no degradation in the quality of the epoxy adhesive. Rating 4: The rate of change in weight is 3% or more and less than 5% with no degradation in the quality of the epoxy adhesive. Rating 3: The rate of change in weight is 5% or more and less than 10% with no degradation in the quality of the epoxy adhesive. Rating 2: The rate of change in weight is 10% or more and less than 15% with no degradation in the quality of the epoxy adhesive. Rating 1: The rate of change in weight is 15% or more and/or there is a degradation in the quality of the epoxy adhesive.

### (6) Test 2 of Adequacy for Printer Component

The ink compositions of the examples and the comparative examples were evaluated for adequacy for a component (head cap component). Specifically, a silicone resin (one-component liquid rubber KE1831 manufactured by Shin-Etsu Chemical Co., Ltd.) for use as a material for inkjet heads was dried at 120°C for 10 minutes to form a cured product, and 0.2 g of the cured product was subjected to an immersion test in which it was immersed in each of the ink compositions of the examples and the comparative examples and allowed to stand at 60°C for 1 week. After the test, it was determined how much the weight of the cured product changed (in the tables, the evaluation result is shown in the "Test 2 of adequacy for printer component" column). Evaluation Criteria
Rating 5: The rate of change in weight is less than 5% with no degradation in the quality of the silicone resin. Rating 4: The rate of change in weight is 5% or more and less than 10% with no degradation in the quality of the silicone resin. Rating 3: The rate of change in weight is 10% or more and less than 15% with no degradation in the quality of the silicone resin. Rating 2: The rate of change in weight is 15% or more and less than 20% with no degradation in the quality of the silicone resin. Rating 1: The rate of change in weight is 20% or more and/or there is a degradation in the quality of the silicone resin.

**[Table 5-1]**

| | | | | | | | | | | | | | | Comparative Example 1 |
|---|---|---|---|---|---|---|---|---|---|---|---|---|---|---|
| | | | | Example 1 | Example 2 | Example 3 | Example 4 | Example 5 | Example 6 | Example 7 | Example 8 | Example 9 | Example 10 | |
| Type | | Name | Flash point (°C) | | | | | | | | | | | |
| | Dialkyl ether | Diethylene glycol diethyl ether | 71.0 | 10.0 | 10.0 | 59.4 | 10.0 | 10.0 | 59.4 | 10.0 | 10.0 | 10.0 | 10.0 | 10.0 |
| | | Diethylene glycol methyl ethyl ether | 64.0 | 59.4 | 59.4 | 10.0 | 59.4 | 59.4 | 10.0 | 59.4 | 59.4 | 58.4 | 59.4 | 59.4 |
| | | Dipropylene glycol dimethyl ether | 65.0 | | | | | | | | | | | |
| | | Diethylene glycol dibutyl ether | 117.2 | | | | | | | | | | | |
| | Monoalkyl ether | Dipropylene glycol monomethyl ether | 76.5 | 5.0 | 5.0 | 5.0 | 5.0 | 5.0 | 5.0 | 5.0 | 5.0 | 5.0 | 5.0 | 5.0 |
| | | Diethylene glycol mono-n-butyl ether | 100.0 | | | | | | | | | | | |
| | | Triethylene glycol mono-n-butyl ether | 156.0 | 5.0 | 5.0 | 5.0 | 5.0 | 5.0 | 5.0 | 5.0 | 5.0 | 5.0 | 5.0 | 5.0 |
| | | Tetraethylene glycol monobutyl ether | 166.0 | | | | | | | | | | | |
| | Alkylamide solvent | N,N-diethylformamide | 60.0 | | | | | | | | | | | |
| | | N,N-diethylpropionamide | 73.0 | | | | | | | | | | | |
| Solvent | | N,N-diethylacetamide | 78.0 | | | | | | | | | | | |
| | Cyclic amide solvent | N-methyl- *ε* -caprolactam | 103.3 | | | | | | | | | | | |
| | | *ε* -Caprolactam | 125.0 | | | | | | | | | | | |
| | Lactone solvent | *γ* -Butyrolactone | 101.0 | 10.0 | 10.0 | 10.0 | 10.0 | 10.0 | 10.0 | 10.0 | 10.0 | 10.0 | 10.0 | 10.0 |
| | | *γ* -Valerolactone | 120.0 | | | | | | | | | | | |
| | | *ε* -Caprolactone | 115.0 | | | | | | | | | | | |
| | Acetate solvent | 3-methoxybutyl acetate | 62.5 | | | | | | | | | | | |
| | Carbonate ester solvent | Propylene carbonate | 135.0 | | | | | | | | | | | |
| | Oxazolidinone solvent | 3-methyl-2-oxazolidinone | 115.0 | | | | | | | | | | | |
| | Imidazolidinone solvent | 1,3-dimethyl-2-imidazolidinone | 76.5 | | | | | | | | | | | |
| | Alkoxyamide solvent | N,N-dimethyl-*β* -methoxypropionamide | 67.9 | | | | | | | | | | | |
| | | | Residual monomer (ppm) | | | | | | | | | | | |
| | Acrylic resin | Synthetic resin[1] | 500 ppm | | 5.0 | | | | | | | | | |
| | Acrylic resin | Synthetic resin[2] | 2,000 ppm | 5.0 | | 5.0 | 5.0 | 5.0 | | 5.0 | | | | |
| | Acrylic resin | Synthetic resin[3] | 10,000 ppm | | | | | | 5.0 | | | | | |
| | Acrylic resin | Synthetic resin[4] | 26,000 ppm | | | | | | | | 5.0 | 5.0 | 5.0 | |
| Resin | Acrylic resin | Synthetic resin[5] | 50,000 ppm | | | | | | | | | | | 5.0 |
| | Acrylic resin | Synthetic resin[6] | 2,300 ppm | | | | | | | | | | | |
| | Acrylic resin | Synthetic resin[7] | 1,900 ppm | | | | | | | | | | | |
| | Acrylic resin | Synthetic resin[15] | 1,800 ppm | | | | | | | | | | | |
| | Acrylic resin | Synthetic resin[16] | 2,200 ppm | | | | | | | | | | | |
| | Acrylic resin | Synthetic resin[17] | 2,200 ppm | | | | | | | | | | | |

**[Table 5-2]**

| | | | | | | | | | | | | | | Comparative Example 1 |
|---|---|---|---|---|---|---|---|---|---|---|---|---|---|---|
| | | | | Example 1 | Example 2 | Example 3 | Example 4 | Example 5 | Example 6 | Example 7 | Example 8 | Example 9 | Example 10 | |
| Type | | Name | Residual monomer (ppm) | | | | | | | | | | | |
| | Vinyl chloride-vinyl acetate copolymer resin | Synthetic resin[8] | 500 ppm | 1.0 | 1.0 | | | | 1.0 | | 1.0 | | | 1.0 |
| | Vinyl chloride-vinyl acetate copolymer resin | Synthetic resin[9] | 2,000 ppm | | | 1.0 | | | | | | | | |
| | Vinyl chloride-vinyl acetate copolymer resin | Synthetic resin[10] | 12,000 ppm | | | | 1.0 | | | | | | | |
| Resin | Vinyl chloride-vinyl acetate copolymer resin | Synthetic resin[11] | 23,000 ppm | | | | | 1.0 | | | | 1.0 | | |
| | Vinyl chloride-vinyl acetate copolymer resin | Synthetic resin[12] | 68,000 ppm | | | | | | | 1.0 | | | 1.0 | |
| | Polyester resin | Synthetic resin[13] | 3,400 ppm | | | | | | | | | | | |
| | Polyurethane resin | Synthetic resin[14] | 2,900 ppm | | | | | | | | | 1.0 | | |
| | Manufacturer | Product name | | | | | | | | | | | | |
| Dispersant | Lubrizol | Solsperse20000 | | | | | | | 1.5 | | | | | |
| | | Solsperse33000 | | 1.5 | 1.5 | 1.5 | 1.5 | 1.5 | | 1.5 | 1.5 | 1.5 | 1.5 | 1.5 |
| Surface modifier | Silicone additive | BYK-331 | | 0.1 | 0.1 | 0.1 | | 0.1 | 0.1 | 0.1 | 0.1 | | 0.1 | 0.1 |
| | | BYK-313 | | | | | 0.1 | | | | | 0.1 | | |
| | C.I. Pigment Yellow 150 | | | | | | | | | | | | | |
| | C.I. Pigment Blue 15:4 | | | 3.0 | 3.0 | 3.0 | 3.0 | 3.0 | 3.0 | 3.0 | 3.0 | 3.0 | 3.0 | 3.0 |
| | C.I. Pigment Yellow 155 | | | | | | | | | | | | | |
| | C.I. Pigment Red 122 | | | | | | | | | | | | | |
| | C.I. Pigment Orange 43 | | | | | | | | | | | | | |
| | C.I. Pigment Orange 64 | | | | | | | | | | | | | |
| Pigment | C.I. Pigment Orange 71 | | | | | | | | | | | | | |
| | C.I. Pigment Orange 73 | | | | | | | | | | | | | |
| | C.I. Pigment Red 254 | | | | | | | | | | | | | |
| | C.I. Pigment Green 36 | | | | | | | | | | | | | |
| | C.I. Pigment Green 7 | | | | | | | | | | | | | |
| | Carbon black | | | | | | | | | | | | | |
| | Titanium oxide | | | | | | | | | | | | | |
| Total | | | | 100.0 | 100.0 | 100.0 | 100.0 | 100.0 | 100.0 | 100.0 | 100.0 | 100.0 | 100.0 | 100.0 |
| Residual monomer content based on total mass of ink composition(ppm) | | | | 105 | 30 | 120 | 220 | 330 | 505 | 780 | 1305 | 1559 | 1980 | 2505 |
| Residual monomer content (parts by mass) based on 100 parts by mass of resin | | | | 0.18 | 0.05 | 0.20 | 0.37 | 0.55 | 0.84 | 1.30 | 2.18 | 2.23 | 3.30 | 4.18 |
| Acrylic resin content (mass%) of ink composition based on total resin mass | | | | 83% | 83% | 83% | 83% | 83% | 83% | 83% | 83% | 71% | 83% | 83% |
| Evaluation items | | Viscosity stability (heated storage) | | 5 | 5 | 5 | 5 | 5 | 5 | 5 | 4 | 4 | 4 | 4 |
| | | Viscosity stability (heat cycles) | | 5 | 5 | 5 | 5 | 5 | 5 | 5 | 4 | 3 | 3 | 1 |
| | | Ejection stability (heated storage) | | 5 | 5 | 5 | 5 | 5 | 5 | 5 | 4 | 4 | 3 | 2 |
| | | Ejection stability (heat cycles) | | 5 | 5 | 5 | 5 | 5 | 5 | 5 | 4 | 3 | 3 | 1 |
| | | Test 1 of adequacy for printer component | | 5 | 5 | 5 | 5 | 5 | 5 | 5 | 3 | 3 | 3 | 2 |
| | | Test 2 of adequacy for printer component | | 5 | 5 | 5 | 5 | 5 | 5 | 5 | 3 | 3 | 3 | 2 |

**[Table 6-1]**

| | | | | Comparative Example 2 | Comparative Example 3 | Comparative Example 4 | Comparative Example 5 | | | | | | | |
|---|---|---|---|---|---|---|---|---|---|---|---|---|---|---|
| | | | | | | | | Example 11 | Example 12 | Example 13 | Example 14 | Example 15 | Example 16 | Example 17 |
| Type | | Name | Flash point (°C) | | | | | | | | | | | |
| | Dialkyl ether | Diethylene glycol diethyl ether | 71.0 | 10.0 | 10.0 | 10.0 | 10.0 | 10.0 | 10.0 | 10.0 | 10.0 | 54.4 | | |
| | | Diethylene glycol methyl ethyl ether | 64.0 | 59.4 | 59.4 | 59.4 | 59.4 | 63.4 | 56.4 | 46.4 | 40.4 | 15.0 | 20.0 | 50.4 |
| | | Dipropylene glycol dimethyl ether | 65.0 | | | | | | | | | | 49.4 | |
| | | Diethylene glycol dibutyl ether | 117.2 | | | | | | | | | | | 20.0 |
| | Monoalkyl ether | Dipropylene glycol monomethyl ether | 76.5 | 5.0 | 5.0 | 5.0 | 5.0 | 5.0 | 5.0 | 5.0 | 5.0 | 5.0 | 5.0 | 5.0 |
| | | Diethylene glycol mono-n-butyl ether | 100.0 | | | | | | | | | | | |
| | | Triethylene glycol mono-n-butyl ether | 156.0 | 5.0 | 5.0 | 5.0 | 5.0 | 5.0 | 5.0 | 5.0 | 5.0 | 5.0 | 5.0 | 5.0 |
| | | Tetraethylene glycol monobutyl ether | 166.0 | | | | | | | | | | | |
| | Alkylamide solvent | N,N-diethylformamide | 60.0 | | | | | | | | | | | |
| | | N,N-diethylpropionamide | 73.0 | | | | | | | | | | | |
| Solvent | | N,N-diethylacetamide | 78.0 | | | | | | | | | | | |
| | Cyclic amide solvent | N-methyl-*ε*-caprolactam | 103.3 | | | | | | | | | | | |
| | | *ε*-Caprolactam | 125.0 | | | | | | | | | | | |
| | Lactone solvent | *γ*-Butyrolactone | 101.0 | 10.0 | 10.0 | 10.0 | 10.0 | 10.0 | 10.0 | 10.0 | 10.0 | 10.0 | 10.0 | 10.0 |
| | | *γ*-Valerolactone | 120.0 | | | | | | | | | | | |
| | | *ε*-Caprolactone | 115.0 | | | | | | | | | | | |
| | Acetate solvent | 3-methoxybutyl acetate | 62.5 | | | | | | | | | | | |
| | Carbonate ester solvent | Propylene carbonate | 135.0 | | | | | | | | | | | |
| | Oxazolidinone solvent | 3-methyl-2-oxazolidinone | 115.0 | | | | | | | | | | | |
| | Imidazolidinone solvent | 1,3-dimethyl-2-imidazolidinone | 76.5 | | | | | | | | | | | |
| | Alkoxyamide solvent | N,N-dimethyl-*β*-methoxypropionamide | 67.9 | | | | | | | | | | | |
| | | | Residual monomer (ppm) | | | | | | | | | | | |
| | Acrylic resin | Synthetic resin[1] | 500 ppm | | | | | | | | | | | |
| | Acrylic resin | Synthetic resin[2] | 2,000 ppm | | | | | 1.0 | 7.0 | 16.0 | 20.0 | 5.0 | 5.0 | |
| | Acrylic resin | Synthetic resin[3] | 10,000 ppm | | | | | | | | | | | 4.0 |
| | Acrylic resin | Synthetic resin[4] | 26,000 ppm | | | | | | | | | | | |
| Resin | Acrylic resin | Synthetic resin[5] | 50,000 ppm | 5.0 | 5.0 | 5.0 | 4.0 | | | | | | | |
| | Acrylic resin | Synthetic resin[6] | 2,300 ppm | | | | | | | | | | | |
| | Acrylic resin | Synthetic resin[7] | 1,900 ppm | | | | | | | | | | | |
| | Acrylic resin | Synthetic resin[15] | 1,800 ppm | | | | | | | | | | | |
| | Acrylic resin | Synthetic resin[16] | 2,200 ppm | | | | | | | | | | | |
| | Acrylic resin | Synthetic resin[17] | 2,200 ppm | | | | | | | | | | | |

**[Table 6-2]**

| | | | | Comparative Example 2 | Comparative Example 3 | Comparative Example 4 | Comparative Example 5 | | | | | | | |
|---|---|---|---|---|---|---|---|---|---|---|---|---|---|---|
| | | | | | | | | Example 11 | Example 12 | Example 13 | Example 14 | Example 15 | Example 16 | Example 17 |
| | Type | Name | Residual monomer (ppm) | | | | | | | | | | | |
| | Vinyl chloride-vinyl acetate copolymer resin | Synthetic resin[8] | 500 ppm | | | | | 1.0 | 2.0 | 3.0 | 5.0 | 1.0 | 1.0 | |
| | Vinyl chloride-vinyl acetate copolymer resin | Synthetic resin[9] | 2,000 ppm | | | | | | | | | | | |
| | Vinyl chloride-vinyl acetate copolymer resin | Synthetic resin[10] | 12,000 ppm | | 1.0 | | | | | | | | | |
| Resin | Vinyl chloride-vinyl acetate copolymer resin | Synthetic resin[11] | 23,000 ppm | 1.0 | | | | | | | | | | 1.0 |
| | Vinyl chloride-vinyl acetate copolymer resin | Synthetic resin[12] | 68,000 ppm | | | 1.0 | 2.0 | | | | | | | |
| | Polyester resin | Synthetic resin[13] | 3,400 ppm | | | | | | | | | | | |
| | Polyurethane resin | Synthetic resin[14] | 2,900 ppm | | | | | | | | | | | |
| | Manufacturer | Product name | | | | | | | | | | | | |
| Dispersant | Lubrizol | Solsperse20000 | | | 1.5 | | | | | | | | | |
| | | Solsperse33000 | | 1.5 | | 1.5 | 1.5 | 1.5 | 1.5 | 1.5 | 1.5 | 1.5 | 1.5 | 1.5 |
| Surface modifier | Silicone additive | BYK-331 | | 0.1 | 0.1 | 0.1 | | 0.1 | 0.1 | 0.1 | 0.1 | 0.1 | 0.1 | 0.1 |
| | | BYK-313 | | | | | 0.1 | | | | | | | |
| | C.I. Pigment Yellow 150 | | | | | | | | | | | | | |
| | C.I. Pigment Blue 15:4 | | | 3.0 | 3.0 | 3.0 | 3.0 | 3.0 | 3.0 | 3.0 | 3.0 | 3.0 | 3.0 | 3.0 |
| | C.I. Pigment Yellow 155 | | | | | | | | | | | | | |
| | C.I. Pigment Red 122 | | | | | | | | | | | | | |
| | C.I. Pigment Orange 43 | | | | | | | | | | | | | |
| | C.I. Pigment Orange 64 | | | | | | | | | | | | | |
| Pigment | C.I. Pigment Orange 71 | | | | | | | | | | | | | |
| | C.I. Pigment Orange 73 | | | | | | | | | | | | | |
| | C.I. Pigment Red 254 | | | | | | | | | | | | | |
| | C.I. Pigment Green 36 | | | | | | | | | | | | | |
| | C.I. Pigment Green 7 | | | | | | | | | | | | | |
| | Carbon black | | | | | | | | | | | | | |
| | Titanium oxide | | | | | | | | | | | | | |
| Total | | | | 100.0 | 100.0 | 100.0 | 100.0 | 100.0 | 100.0 | 100.0 | 100.0 | 100.0 | 100.0 | 100.0 |
| Residual monomer content based on total mass of ink composition(ppm) | | | | 2730 | 2620 | 3180 | 3360 | 25 | 150 | 335 | 425 | 105 | 105 | 630 |
| Residual monomer content (parts by mass) based on 100 parts by mass of resin | | | | 4.55 | 4.37 | 5.30 | 5.60 | 0.13 | 0.17 | 0.18 | 0.17 | 0.18 | 0.18 | 1.26 |
| Acrylic resin content (mass%) of ink composition based on total resin mass | | | | 83% | 83% | 83% | 67% | 50% | 78% | 84% | 80% | 83% | 83% | 80% |
| Evaluation items | | Viscosity stability (heated storage) | | 4 | 4 | 4 | 4 | 5 | 4 | 3 | 2 | 5 | 5 | 5 |
| | | Viscosity stability (heat cycles) | | 1 | 1 | 1 | 1 | 5 | 3 | 3 | 2 | 5 | 5 | 5 |
| | | Ejection stability (heated storage) | | 2 | 2 | 2 | 2 | 5 | 4 | 3 | 2 | 5 | 5 | 5 |
| | | Ejection stability (heat cycles) | | 1 | 1 | 1 | 1 | 5 | 3 | 3 | 2 | 5 | 5 | 5 |
| | | Test 1 of adequacy for printer component | | 2 | 2 | 2 | 2 | 5 | 5 | 5 | 4 | 5 | 5 | 5 |
| | | Test 2 of adequacy for printer component | | 2 | 2 | 2 | 2 | 5 | 5 | 5 | 4 | 5 | 5 | 5 |

**[Table 7-1]**

| | | | | | | | | | | | | | | |
|---|---|---|---|---|---|---|---|---|---|---|---|---|---|---|
| | | | | Example 18 | Example 19 | Example 20 | Example 21 | Example 22 | Example 23 | Example 24 | Example 25 | Example 26 | Example 27 | Example 28 |
| Type | | Name | Flash point (°C) | | | | | | | | | | | |
| | Dialkyl ether | Diethylene glycol diethyl ether | 71.0 | | 20.0 | 20.0 | 20.0 | 20.0 | 20.0 | 20.0 | 20.0 | 20.0 | 20.0 | 20.0 |
| | | Diethylene glycol methyl ethyl ether | 64.0 | | 55.4 | 57.4 | 54.4 | 60.4 | 54.4 | 51.4 | 51.4 | 54.4 | 51.4 | 54.4 |
| | | Dipropylene glycol dimethyl ether | 65.0 | | | | | | | | | | | |
| | | Diethylene glycol dibutyl ether | 117.2 | | | | | | | | | | | |
| | Monoalkyl ether | Dipropylene glycol monomethyl ether | 76.5 | | | | | | 5.0 | 5.0 | 5.0 | 5.0 | 5.0 | 5.0 |
| | | Diethylene glycol mono-n-butyl ether | 100.0 | | 5.0 | | | | | | | | | |
| | | Triethylene glycol mono-n-butyl ether | 156.0 | | | 5.0 | | | | | | | | |
| | | Tetraethylene glycol monobutyl ether | 166.0 | | | | 5.0 | | | | | | | |
| | Alkylamide solvent | N,N-diethylformamide | 60.0 | | | | | | 10.0 | | | | | |
| | | N,N-diethylpropionamide | 73.0 | | | | | | | 10.0 | | | | |
| Solvent | | N,N-diethylacetamide | 78.0 | | | | | | | | 10.0 | | | |
| | Cyclic amide solvent | N-methyl-*ε*-caprolactam | 103.3 | | | | | | | | | 10.0 | | |
| | | *ε*-Caprolactam | 125.0 | | | | | | | | | | 10.0 | |
| | Lactone solvent | *γ*-Butyrolactone | 101.0 | 10.0 | 10.0 | 10.0 | 10.0 | 10.0 | | 3.0 | 3.0 | | 3.0 | |
| | | *γ*-Valerolactone | 120.0 | | | | | | | | | | | 10.0 |
| | | *ε*-Caprolactone | 115.0 | | | | | | | | | | | |
| | Acetate solvent | 3-methoxybutyl acetate | 62.5 | 80.4 | | | | | | | | | | |
| | Carbonate ester solvent | Propylene carbonate | 135.0 | | | | | | | | | | | |
| | Oxazolidinone solvent | 3-methyl-2-oxazolidinone | 115.0 | | | | | | | | | | | |
| | Imidazolidinone solvent | 1,3-dimethyl-2-imidazolidinone | 76.5 | | | | | | | | | | | |
| | Alkoxyamide solvent | N,N-dimethyl-*β*-methoxypropionamide | 67.9 | | | | | | | | | | | |
| | | | Residual monomer (ppm) | | | | | | | | | | | |
| | Acrylic resin | Synthetic resin[1] | 500 ppm | | | | | | 5.0 | | | | | |
| | Acrylic resin | Synthetic resin[2] | 2,000 ppm | | | | | | | 5.0 | 5.0 | 5.0 | | |
| | Acrylic resin | Synthetic resin[3] | 10,000 ppm | | 5.0 | | | | | | | | 5.0 | |
| | Acrylic resin | Synthetic resin[4] | 26,000 ppm | 5.0 | | | 5.0 | 5.0 | | | | | | 5.0 |
| Resin | Acrylic resin | Synthetic resin[5] | 50,000 ppm | | | | | | | | | | | |
| | Acrylic resin | Synthetic resin[6] | 2,300 ppm | | | | | | | | | | | |
| | Acrylic resin | Synthetic resin[7] | 1,900 ppm | | | | | | | | | | | |
| | Acrylic resin | Synthetic resin[15] | 1,800 ppm | | | | | | | | | | | |
| | Acrylic resin | Synthetic resin[16] | 2,200 ppm | | | | | | | | | | | |
| | Acrylic resin | Synthetic resin[17] | 2,200 ppm | | | | | | | | | | | |

**[Table 7-2]**

| | | | | | | | | | | | | | | |
|---|---|---|---|---|---|---|---|---|---|---|---|---|---|---|
| | | | | Example 18 | Example 19 | Example 20 | Example 21 | Example 22 | Example 23 | Example 24 | Example 25 | Example 26 | Example 27 | Example 28 |
| Type | | Name | Residual monomer (ppm) | | | | | | | | | | | |
| | Vinyl chloride-vinyl acetate copolymer resin | Synthetic resin[8] | 500 ppm | | | | | | 1.0 | | | | 1.0 | 1.0 |
| | Vinyl chloride-vinyl acetate copolymer resin | Synthetic resin[9] | 2,000 ppm | | | 3.0 | | | | 1.0 | | | | |
| | Vinyl chloride-vinyl acetate copolymer resin | Synthetic resin[10] | 12,000 ppm | | | | | | | | 1.0 | | | |
| Resin | Vinyl chloride-vinyl acetate copolymer resin | Synthetic resin[11] | 23,000 ppm | | | | | | | | | 1.0 | | |
| | Vinyl chloride-vinyl acetate copolymer resin | Synthetic resin[12] | 68,000 ppm | | | | | | | | | | | |
| | Polyester resin | Synthetic resin[13] | 3,400 ppm | | | | 1.0 | | | | | | | |
| | Polyurethane resin | Synthetic resin[14] | 2,900 ppm | | | | | | | | | | | |
| | Manufacturer | Product name | | | | | | | | | | | | |
| Dispersant | Lubrizol | Solsperse20000 | | | 1.5 | | | | | 1.5 | | 1.5 | | |
| | | Solsperse33000 | | 1.5 | | 1.5 | 1.5 | 1.5 | 1.5 | | 1.5 | | 1.5 | 1.5 |
| Surface modifier | Silicone additive | BYK-331 | | 0.1 | 0.1 | | 0.1 | 0.1 | 0.1 | 0.1 | | 0.1 | 0.1 | 0.1 |
| | | BYK-313 | | | | 0.1 | | | | | 0.1 | | | |
| | C.I. Pigment Yellow 150 | | | | | | | | | | | | | |
| | C.I. Pigment Blue 15:4 | | | 3.0 | 3.0 | 3.0 | 3.0 | 3.0 | 3.0 | 3.0 | 3.0 | 3.0 | 3.0 | 3.0 |
| | C.I. Pigment Yellow 155 | | | | | | | | | | | | | |
| | C.I. Pigment Red 122 | | | | | | | | | | | | | |
| | C.I. Pigment Orange 43 | | | | | | | | | | | | | |
| | C.I. Pigment Orange 64 | | | | | | | | | | | | | |
| Pigment | C.I. Pigment Orange 71 | | | | | | | | | | | | | |
| | C.I. Pigment Orange 73 | | | | | | | | | | | | | |
| | C.I. Pigment Red 254 | | | | | | | | | | | | | |
| | C.I. Pigment Green 36 | | | | | | | | | | | | | |
| | C.I. Pigment Green 7 | | | | | | | | | | | | | |
| | Carbon black | | | | | | | | | | | | | |
| | Titanium oxide | | | | | | | | | | | | | |
| Total | | | | 100.0 | 100.0 | 100.0 | 100.0 | 100.0 | 100.0 | 100.0 | 100.0 | 100.0 | 100.0 | 100.0 |
| Residual monomer content based on total mass of ink composition(ppm) | | | | 1300 | 500 | 60 | 1334 | 1300 | 30 | 120 | 220 | 330 | 505 | 1305 |
| Residual monomer content (parts by mass) based on 100 parts by mass of resin | | | | 2.60 | 1.00 | 0.20 | 2.22 | 2.60 | 0.05 | 0.20 | 0.37 | 0.55 | 0.84 | 2.18 |
| Acrylic resin content (mass%) of ink composition based on total resin mass | | | | 100% | 100% | 0% | 83% | 100% | 83% | 83% | 83% | 83% | 83% | 83% |
| Evaluation items | | Viscosity stability (heated storage) | | 3 | 5 | 5 | 4 | 4 | 5 | 5 | 5 | 5 | 5 | 4 |
| | | Viscosity stability (heat cycles) | | 3 | 5 | 3 | 4 | 4 | 5 | 5 | 5 | 5 | 5 | 4 |
| | | Ejection stability (heated storage) | | 3 | 5 | 5 | 4 | 4 | 5 | 5 | 5 | 5 | 5 | 4 |
| | | Ejection stability (heat cycles) | | 3 | 5 | 3 | 4 | 4 | 5 | 5 | 5 | 5 | 5 | 4 |
| | | Test 1 of adequacy for printer component | | 3 | 5 | 5 | 3 | 3 | 5 | 5 | 5 | 5 | 5 | 3 |
| | | Test 2 of adequacy for printer component | | 3 | 5 | 5 | 3 | 3 | 5 | 5 | 5 | 4 | 4 | 3 |

**[Table 8-1]**

| | | | | | | | | | | | | | | |
|---|---|---|---|---|---|---|---|---|---|---|---|---|---|---|
| | | | | Example 29 | Example 30 | Example 31 | Example 32 | Example 33 | Example 34 | Example 35 | Example 36 | Example 37 | Example 38 | Example 39 |
| | Type | Name | Flash point (°C) | | | | | | | | | | | |
| | Dialkyl ether | Diethylene glycol diethyl ether | 71.0 | 20.0 | 20.0 | 20.0 | 20.0 | 20.0 | 20.0 | 20.0 | 20.0 | 20.0 | 20.0 | 20.0 |
| | | Diethylene glycol methyl ethyl ether | 64.0 | 54.4 | 64.4 | 54.4 | 54.4 | 54.4 | 54.4 | 54.4 | 54.4 | 54.4 | 54.4 | 47.4 |
| | | Dipropylene glycol dimethyl ether | 65.0 | | | | | | | | | | | |
| | | Diethylene glycol dibutyl ether | 117.2 | | | | | | | | | | | |
| | Monoalkyl ether | Dipropylene glycol monomethyl ether | 76.5 | 5.0 | 5.0 | 5.0 | 5.0 | 5.0 | 5.0 | 5.0 | 5.0 | 5.0 | 5.0 | 5.0 |
| | | Diethylene glycol mono-n-butyl ether | 100.0 | | | | | | | | | | | |
| | | Triethylene glycol mono-n-butyl ether | 156.0 | | | | | | | | | | | |
| | | Tetraethylene glycol monobutyl ether | 166.0 | | | | | | | | | | | |
| | Alkylamide solvent | N,N-diethylformamide | 60.0 | | | | | | | | | | | |
| | | N,N-diethylpropionamide | 73.0 | | | | | | | | | | | |
| Solvent | | N,N-diethylacetamide | 78.0 | | | | | | | | | | | |
| | Cyclic amide solvent | N-methyl-*ε*-caprolactam | 103.3 | | | | | | | | | | | |
| | | *ε*-Caprolactam | 125.0 | | | | | | | | | | | |
| | Lactone solvent | *γ*-Butyrolactone | 101.0 | | | | | | | 10.0 | 10.0 | 10.0 | 10.0 | 10.0 |
| | | *γ*-Valerolactone | 120.0 | | | | | | | | | | | |
| | | *ε*-Caprolactone | 115.0 | 10.0 | | | | | | | | | | |
| | Acetate solvent | 3-methoxybutyl acetate | 62.5 | | | | | | | | | | | |
| | Carbonate ester solvent | Propylene carbonate | 135.0 | | | 10.0 | | | | | | | | |
| | Oxazolidinone solvent | 3-methyl-2-oxazolidinone | 115.0 | | | | 10.0 | | | | | | | |
| | Imidazolidinone solvent | 1,3-dimethyl-2-imidazolidinone | 76.5 | | | | | 10.0 | | | | | | |
| | Alkoxyamide solvent | N,N-dimethyl-*β*-methoxypropionamide | 67.9 | | | | | | 10.0 | | | | | |
| | | | Residual monomer (ppm) | | | | | | | | | | | |
| | Acrylic resin | Synthetic resin[1] | 500 ppm | | | | | | | | | | | |
| | Acrylic resin | Synthetic resin[2] | 2,000 ppm | | | | | | | 5.0 | 5.0 | 5.0 | 5.0 | 5.0 |
| | Acrylic resin | Synthetic resin[3] | 10,000 ppm | | | | | | | | | | | |
| | Acrylic resin | Synthetic resin[4] | 26,000 ppm | 5.0 | 5.0 | 5.0 | 5.0 | 5.0 | 5.0 | | | | | |
| Resin | Acrylic resin | Synthetic resin[5] | 50,000 ppm | | | | | | | | | | | |
| | Acrylic resin | Synthetic resin[6] | 2,300 ppm | | | | | | | | | | | |
| | Acrylic resin | Synthetic resin[7] | 1,900 ppm | | | | | | | | | | | |
| | Acrylic resin | Synthetic resin[15] | 1,800 ppm | | | | | | | | | | | |
| | Acrylic resin | Synthetic resin[16] | 2,200 ppm | | | | | | | | | | | |
| | Acrylic resin | Synthetic resin[17] | 2,200 ppm | | | | | | | | | | | |

**[Table 8-2]**

| | | | | | | | | | | | | | | |
|---|---|---|---|---|---|---|---|---|---|---|---|---|---|---|
| | | | | Example 29 | Example 30 | Example 31 | Example 32 | Example 33 | Example 34 | Example 35 | Example 36 | Example 37 | Example 38 | Example 39 |
| Type | | Name | Residual monomer (ppm) | | | | | | | | | | | |
| | Vinyl chloride-vinyl acetate copolymer resin | Synthetic resin[8] | 500 ppm | | | | | | | | | | | |
| | Vinyl chloride-vinyl acetate copolymer resin | Synthetic resin[9] | 2,000 ppm | | | | | | | 1.0 | 1.0 | 1.0 | 1.0 | 1.0 |
| | Vinyl chloride-vinyl acetate copolymer resin | Synthetic resin[10] | 12,000 ppm | | | | | | | | | | | |
| Resin | Vinyl chloride-vinyl acetate copolymer resin | Synthetic resin[1 1] | 23,000 ppm | 1.0 | | 1.0 | 1.0 | 1.0 | 1.0 | | | | | |
| | Vinyl chloride-vinyl acetate copolymer resin | Synthetic resin[12] | 68,000 ppm | | 1.0 | | | | | | | | | |
| | Polyester resin | Synthetic resin[13] | 3,400 ppm | | | | | | | | | | | |
| | Polyurethane resin | Synthetic resin[14] | 2,900 ppm | | | | | | | | | | | |
| | Manufacturer | Product name | | | | | | | | | | | | |
| Dispersant | Lubrizol | Solsperse20000 | | 1.5 | | 1.5 | 1.5 | 1.5 | 1.5 | | 1.5 | | | |
| | | Solsperse33000 | | | 1.5 | | | | | 1.5 | | 1.5 | 1.5 | 1.5 |
| Surface modifier | Silicone additive | BYK-331 | | 0.1 | | 0.1 | 0.1 | 0.1 | 0.1 | 0.1 | 0.1 | | 0.1 | 0.1 |
| | | BYK-313 | | | 0.1 | | | | | | | 0.1 | | |
| | C.I. Pigment Yellow 150 | | | | | | | | | 3.0 | | | | |
| | C.I. Pigment Blue 15:4 | | | 3.0 | 3.0 | 3.0 | 3.0 | 3.0 | 3.0 | | | | | |
| | C.I. Pigment Yellow 155 | | | | | | | | | | 3.0 | | | |
| | C.I. Pigment Red 122 | | | | | | | | | | | 3.0 | | |
| | C.I. Pigment Orange 43 | | | | | | | | | | | | | |
| | C.I. Pigment Orange 64 | | | | | | | | | | | | | |
| Pigment | C.I. Pigment Orange 71 | | | | | | | | | | | | | |
| | C.I. Pigment Orange 73 | | | | | | | | | | | | | |
| | C.I. Pigment Red 254 | | | | | | | | | | | | | |
| | C.I. Pigment Green 36 | | | | | | | | | | | | | |
| | C.I. Pigment Green 7 | | | | | | | | | | | | | |
| | Carbon black | | | | | | | | | | | | 3.0 | |
| | Titanium oxide | | | | | | | | | | | | | 10.0 |
| Total | | | | 100.0 | 100.0 | 100.0 | 100.0 | 100.0 | 100.0 | 100.0 | 100.0 | 100.0 | 100.0 | 100.0 |
| Residual monomer content based on total mass of ink composition(ppm) | | | | 1530 | 1980 | 1530 | 1530 | 1530 | 1530 | 120 | 120 | 120 | 120 | 120 |
| Residual monomer content (parts by mass) based on 100 parts by mass of resin | | | | 2.55 | 3.30 | 2.55 | 2.55 | 2.55 | 2.55 | 0.20 | 0.20 | 0.20 | 0.20 | 0.20 |
| Acrylic resin content (mass%) of ink composition based on total resin mass | | | | 83% | 83% | 83% | 83% | 83% | 83% | 83% | 83% | 83% | 83% | 83% |
| Evaluation items | | Viscosity stability (heated storage) | | 4 | 4 | 4 | 4 | 3 | 4 | 5 | 5 | 5 | 5 | 5 |
| | | Viscosity stability (heat cycles) | | 3 | 3 | 3 | 3 | 3 | 3 | 5 | 5 | 5 | 5 | 5 |
| | | Ejection stability (heated storage) | | 4 | 4 | 4 | 4 | 4 | 4 | 5 | 5 | 5 | 5 | 5 |
| | | Ejection stability (heat cycles) | | 3 | 3 | 3 | 3 | 3 | 3 | 5 | 5 | 5 | 5 | 5 |
| | | Test 1 of adequacy for printer component | | 3 | 3 | 3 | 2 | 2 | 2 | 5 | 5 | 5 | 5 | 5 |
| | | Test 2 of adequacy for printer component | | 3 | 3 | 3 | 2 | 2 | 2 | 5 | 5 | 5 | 5 | 5 |

**[Table 9-1]**

| | | | | | | | | | | | | | | |
|---|---|---|---|---|---|---|---|---|---|---|---|---|---|---|
| | | | | Example 40 | Example 41 | Example 42 | Example 43 | Example 44 | Example 45 | Example 46 | Example 47 | Example 48 | Example 49 | Example 50 |
| Type | | Name | Flash point (°C) | | | | | | | | | | | |
| | Dialkyl ether | Diethylene glycol diethyl ether | 71.0 | 20.0 | 20.0 | 20.0 | 20.0 | 20.0 | 20.0 | 20.0 | 10.0 | 10.0 | 10.0 | 10.0 |
| | | Diethylene glycol methyl ethyl ether | 64.0 | 54.4 | 54.4 | 54.4 | 54.4 | 54.4 | 54.4 | 54.4 | 58.4 | 61.4 | 61.4 | 62.4 |
| | | Dipropylene glycol dimethyl ether | 65.0 | | | | | | | | | | | |
| | | Diethylene glycol dibutyl ether | 117.2 | | | | | | | | | | | |
| | Monoalkyl ether | Dipropylene glycol monomethyl ether | 76.5 | 5.0 | 5.0 | 5.0 | 5.0 | 5.0 | 5.0 | 5.0 | 5.0 | 5.0 | 5.0 | 5.0 |
| | | Diethylene glycol mono-n-butyl ether | 100.0 | | | | | | | | | | | |
| | | Triethylene glycol mono-n-butyl ether | 156.0 | | | | | | | | 5.0 | 5.0 | 5.0 | 5.0 |
| | | Tetraethylene glycol monobutyl ether | 166.0 | | | | | | | | | | | |
| | Alkylamide solvent | N,N-diethylformamide | 60.0 | | | | | | | | | | | |
| | | N,N-diethylpropionamide | 73.0 | | | | | | | | | | | |
| Solvent | | N,N-diethylacetamide | 78.0 | | | | | | | | | | | |
| | Cyclic amide solvent | N-methyl-*ε*-caprolactam | 103.3 | | | | | | | | | | | |
| | | *ε*-Caprolactam | 125.0 | | | | | | | | | | | |
| | Lactone solvent | *γ*-Butyrolactone | 101.0 | 10.0 | 10.0 | 10.0 | 10.0 | 10.0 | 10.0 | 10.0 | 10.0 | 10.0 | 10.0 | 10.0 |
| | | *γ*-Valerolactone | 120.0 | | | | | | | | | | | |
| | | *ε*-Caprolactone | 115.0 | | | | | | | | | | | |
| | Acetate solvent | 3-methoxybutyl acetate | 62.5 | | | | | | | | | | | |
| | Carbonate ester solvent | Propylene carbonate | 135.0 | | | | | | | | | | | |
| | Oxazolidinone solvent | 3-methyl-2-oxazolidinone | 115.0 | | | | | | | | | | | |
| | Imidazolidinone solvent | 1,3-dimethyl-2-imidazolidinone | 76.5 | | | | | | | | | | | |
| | Alkoxyamide solvent | N,N-dimethyl-*β*-methoxypropionamide | 67.9 | | | | | | | | | | | |
| | | | Residual monomer (ppm) | | | | | | | | | | | |
| | Acrylic resin | Synthetic resin[1] | 500 ppm | | | | | | | | | | | |
| | Acrylic resin | Synthetic resin[2] | 2,000 ppm | 5.0 | 5.0 | 5.0 | 5.0 | 5.0 | 5.0 | 5.0 | | | 3.0 | 1.0 |
| | Acrylic resin | Synthetic resin[3] | 10,000 ppm | | | | | | | | | | | |
| | Acrylic resin | Synthetic resin[4] | 26,000 ppm | | | | | | | | | | | |
| Resin | Acrylic resin | Synthetic resin[5] | 50,000 ppm | | | | | | | | | | | |
| | Acrylic resin | Synthetic resin[6] | 2,300 ppm | | | | | | | | 6.0 | | | |
| | Acrylic resin | Synthetic resin[7] | 1,900 ppm | | | | | | | | | 3.0 | | |
| | Acrylic resin | Synthetic resin[15] | 1,800 ppm | | | | | | | | | | | |
| | Acrylic resin | Synthetic resin[16] | 2,200 ppm | | | | | | | | | | | |
| | Acrylic resin | Synthetic resin[17] | 2,200 ppm | | | | | | | | | | | |

**[Table 9-2]**

| | | | | | | | | | | | | | | |
|---|---|---|---|---|---|---|---|---|---|---|---|---|---|---|
| | | | | Example 40 | Example 41 | Example 42 | Example 43 | Example 44 | Example 45 | Example 46 | Example 47 | Example 48 | Example 49 | Example 50 |
| Type | | Name | Residual monomer (ppm) | | | | | | | | | | | |
| | Vinyl chloride-vinyl acetate copolymer resin | Synthetic resin[8] | 500 ppm | | | | | | | | | | | 2.0 |
| | Vinyl chloride-vinyl acetate copolymer resin | Synthetic resin[9] | 2,000 ppm | 1.0 | 1.0 | 1.0 | 1.0 | 1.0 | 1.0 | 1.0 | 1.0 | 1.0 | 1.0 | |
| | Vinyl chloride-vinyl acetate copolymer resin | Synthetic resin[10] | 12,000 ppm | | | | | | | | | | | |
| Resin | Vinyl chloride-vinyl acetate copolymer resin | Synthetic resin[11] | 23,000 ppm | | | | | | | | | | | |
| | Vinyl chloride-vinyl acetate copolymer resin | Synthetic resin[12] | 68,000 ppm | | | | | | | | | | | |
| | Polyester resin | Synthetic resin[13] | 3,400 ppm | | | | | | | | | | | |
| | Polyurethane resin | Synthetic resin[14] | 2,900 ppm | | | | | | | | | | | |
| | Manufacturer | Product name | | | | | | | | | | | | |
| Dispersant | Lubrizol | Solsperse20000 | | | | | | | | | | | | |
| | | Solsperse33000 | | 1.5 | 1.5 | 1.5 | 1.5 | 1.5 | 1.5 | 1.5 | 1.5 | 1.5 | 1.5 | 1.5 |
| Surface modifier | Silicone additive | BYK-331 | | 0.1 | 0.1 | 0.1 | 0.1 | 0.1 | 0.1 | 0.1 | 0.1 | 0.1 | 0.1 | 0.1 |
| | | BYK-313 | | | | | | | | | | | | |
| | C.I. Pigment Yellow 150 | | | | | | | | | | | | | |
| | C.I. Pigment Blue 15:4 | | | | | | | | | | 3.0 | 3.0 | 3.0 | 3.0 |
| | C.I. Pigment Yellow 155 | | | | | | | | | | | | | |
| | C.I. Pigment Red 122 | | | | | | | | | | | | | |
| | C.I. Pigment Orange 43 | | | 3.0 | | | | | | | | | | |
| | C.I. Pigment Orange 64 | | | | | | | | | 3.0 | | | | |
| Pigment | C.I. Pigment Orange 71 | | | | 3.0 | | | | | | | | | |
| | C.I. Pigment Orange 73 | | | | | 3.0 | | | | | | | | |
| | C.I. Pigment Red 254 | | | | | | 3.0 | | | | | | | |
| | C.I. Pigment Green 36 | | | | | | | 3.0 | | | | | | |
| | C.I. Pigment Green 7 | | | | | | | | 3.0 | | | | | |
| | Carbon black | | | | | | | | | | | | | |
| | Titanium oxide | | | | | | | | | | | | | |
| Total | | | | 100.0 | 100.0 | 100.0 | 100.0 | 100.0 | 100.0 | 100.0 | 100.0 | 100.0 | 100.0 | 100.0 |
| Residual monomer content based on total mass of ink composition(ppm) | | | | 120 | 120 | 120 | 120 | 120 | 120 | 120 | 158 | 77 | 80 | 30 |
| Residual monomer content (parts by mass) based on 100 parts by mass of resin | | | | 0.20 | 0.20 | 0.20 | 0.20 | 0.20 | 0.20 | 0.20 | 0.23 | 0.19 | 0.20 | 0.10 |
| Acrylic resin content (mass%) of ink composition based on total resin mass | | | | 83% | 83% | 83% | 83% | 83% | 83% | 83% | 86% | 75% | 75% | 33% |
| Evaluation items | | Viscosity stability (heated storage) | | 3 | 5 | 5 | 5 | 5 | 5 | 5 | 5 | 5 | 5 | 5 |
| | | Viscosity stability (heat cycles) | | 4 | 5 | 5 | 5 | 5 | 5 | 5 | 5 | 5 | 5 | 5 |
| | | Ejection stability (heated storage) | | 3 | 5 | 5 | 5 | 5 | 5 | 5 | 5 | 5 | 5 | 5 |
| | | Ejection stability (heat cycles) | | 3 | 5 | 5 | 5 | 5 | 5 | 5 | 5 | 5 | 5 | 5 |
| | | Test 1 of adequacy for printer component | | 5 | 5 | 5 | 5 | 5 | 5 | 5 | 5 | 5 | 5 | 5 |
| | | Test 2 of adequacy for printer component | | 5 | 5 | 5 | 5 | 5 | 5 | 5 | 5 | 5 | 5 | 5 |

**[Table 10-1]**

| | | | | | | | | | | Comparative Example 6 | | Comparative Example 7 | | |
|---|---|---|---|---|---|---|---|---|---|---|---|---|---|---|
| | | | | Example 51 | Example 52 | Example 53 | Example 54 | Example 55 | Example 56 | | Example 57 | | Example 58 | Example 59 |
| Type | | Name | Flash point (°C) | | | | | | | | | | | |
| | Dialkyl ether | Diethylene glycol diethyl ether | 71.0 | 10.0 | 10.0 | 10.0 | 10.0 | 10.0 | 10.0 | 10.0 | 10.0 | 10.0 | 10.0 | 10.0 |
| | | Diethylene glycol methyl ethyl ether | 64.0 | 60.4 | 66.4 | 54.4 | 49.4 | 39.4 | 49.4 | 60.4 | 60.4 | 62.4 | 62.4 | 51.4 |
| | | Dipropylene glycol dimethyl ether | 65.0 | | | | | | | | | | | |
| | | Diethylene glycol dibutyl ether | 117.2 | | | | | | | | | | | |
| | Monoalkyl ether | Dipropylene glycol monomethyl ether | 76.5 | 5.0 | 5.0 | 5.0 | 5.0 | 5.0 | 5.0 | 5.0 | 5.0 | 5.0 | 5.0 | 5.0 |
| | | Diethylene glycol mono-n-butyl ether | 100.0 | | | | | | | | | | | |
| | | Triethylene glycol mono-n-butyl ether | 156.0 | 5.0 | 5.0 | 5.0 | 5.0 | 5.0 | 5.0 | 5.0 | 5.0 | 5.0 | 5.0 | 5.0 |
| | | Tetraethylene glycol monobutyl ether | 166.0 | | | | | | | | | | | |
| | Alkylamide solvent | N,N-diethylformamide | 60.0 | | | | | 30.0 | 20.0 | | | | | 10.0 |
| | | N,N-diethylpropionamide | 73.0 | | | | | | | | | | | |
| Solvent | | N,N-diethylacetamide | 78.0 | | | | | | | | | | | |
| | Cyclic amide solvent | N-methyl-*ε*-caprolactam | 103.3 | | | | | | | | | | | |
| | | *ε*-Caprolactam | 125.0 | | | | | | | | | | | |
| | Lactone solvent | *γ*-Butyrolactone | 101.0 | 10.0 | 3.0 | 15.0 | 20.0 | | | 10.0 | 10.0 | 10.0 | 10.0 | 10.0 |
| | | *γ*-Valerolactone | 120.0 | | | | | | | | | | | |
| | | *ε*-Caprolactone | 115.0 | | | | | | | | | | | |
| | Acetate solvent | 3-methoxybutyl acetate | 62.5 | | | | | | | | | | | |
| | Carbonate ester solvent | Propylene carbonate | 135.0 | | | | | | | | | | | |
| | Oxazolidinone solvent | 3-methyl-2-oxazolidinone | 115.0 | | | | | | | | | | | |
| | Imidazolidinone solvent | 1,3-dimethyl-2-imidazolidinone | 76.5 | | | | | | | | | | | |
| | Alkoxyamide solvent | N,N-dimethyl-*β*-methoxypropionamide | 67.9 | | | | | | | | | | | |
| | | | Residual monomer (ppm) | | | | | | | | | | | |
| | Acrylic resin | Synthetic resin[1] | 500 ppm | | | | | | | | | | | |
| | Acrylic resin | Synthetic resin[2] | 2,000 ppm | 1.0 | 5.0 | 5.0 | 5.0 | 5.0 | 5.0 | | 5.0 | | | |
| | Acrylic resin | Synthetic resin[3] | 10,000 ppm | | | | | | | | | | | |
| | Acrylic resin | Synthetic resin[4] | 26,000 ppm | | | | | | | | | | | |
| Resin | Acrylic resin | Synthetic resin[5] | 50,000 ppm | | | | | | | 5.0 | | | | |
| | Acrylic resin | Synthetic resin[6] | 2,300 ppm | | | | | | | | | | | |
| | Acrylic resin | Synthetic resin[7] | 1,900 ppm | | | | | | | | | | | |
| | Acrylic resin | Synthetic resin[15] | 1,800 ppm | | | | | | | | | | | |
| | Acrylic resin | Synthetic resin[16] | 2,200 ppm | | | | | | | | | | | |
| | Acrylic resin | Synthetic resin[17] | 2,200 ppm | | | | | | | | | | | |

**[Table 10-2]**

| | | | | | | | | | | Comparative Example 6 | | Comparative Example 7 | | |
|---|---|---|---|---|---|---|---|---|---|---|---|---|---|---|
| | | | | Example 51 | Example 52 | Example 53 | Example 54 | Example 55 | Example 56 | | Example 57 | | Example 58 | Example 59 |
| Type | | Name Residual monomer (ppm) | | | | | | | | | | | | |
| | Vinyl chloride-vinyl acetate copolymer resin | Synthetic resin[8] | 500 ppm | | 1.0 | 1.0 | 1.0 | 1.0 | 1.0 | | | | | |
| | Vinyl chloride-vinyl acetate copolymer resin | Synthetic resin[9] | 2,000 ppm | 4.0 | | | | | | | | | 3.0 | 3.0 |
| | Vinyl chloride-vinyl acetate copolymer resin | Synthetic resin[10] | 12,000 ppm | | | | | | | | | | | |
| Resin | Vinyl chloride-vinyl acetate copolymer resin | Synthetic resin[11] | 23,000 ppm | | | | | | | | | | | |
| | Vinyl chloride-vinyl acetate copolymer resin | Synthetic resin[12] | 68,000 ppm | | | | | | | | | 3.0 | | |
| | Polyester resin | Synthetic resin[13] | 3,400 ppm | | | | | | | | | | | 1.0 |
| | Polyurethane resin | Synthetic resin[14] | 2,900 ppm | | | | | | | | | | | |
| | Manufacturer | Product name | | | | | | | | | | | | |
| Dispersant | Lubrizol | Solsperse20000 | | | | | | | | | | | | |
| | | Solsperse33000 | | 1.5 | 1.5 | 1.5 | 1.5 | 1.5 | 1.5 | 1.5 | 1.5 | 1.5 | 1.5 | 1.5 |
| Surface modifier | Silicone additive | BYK-331 | | 0.1 | 0.1 | 0.1 | 0.1 | 0.1 | 0.1 | 0.1 | 0.1 | 0.1 | 0.1 | 0.1 |
| | | BYK-313 | | | | | | | | | | | | |
| | C.I. Pigment Yellow 150 | | | | | | | | | | | | | |
| | C.I. Pigment Blue 15:4 | | | 3.0 | 3.0 | 3.0 | 3.0 | 3.0 | 3.0 | 3.0 | 3.0 | 3.0 | 3.0 | 3.0 |
| | C.I. Pigment Yellow 155 | | | | | | | | | | | | | |
| | C.I. Pigment Red 122 | | | | | | | | | | | | | |
| | C.I. Pigment Orange 43 | | | | | | | | | | | | | |
| | C.I. Pigment Orange 64 | | | | | | | | | | | | | |
| Pigment | C.I. Pigment Orange 71 | | | | | | | | | | | | | |
| | C.I. Pigment Orange 73 | | | | | | | | | | | | | |
| | C.I. Pigment Red 254 | | | | | | | | | | | | | |
| | C.I. Pigment Green 36 | | | | | | | | | | | | | |
| | C.I. Pigment Green 7 | | | | | | | | | | | | | |
| | Carbon black | | | | | | | | | | | | | |
| | Titanium oxide | | | | | | | | | | | | | |
| Total | | | | 100.0 | 100.0 | 100.0 | 100.0 | 100.0 | 100.0 | 100.0 | 100.0 | 100.0 | 100.0 | 100.0 |
| Residual monomer content based on total mass of ink composition(ppm) | | | | 100 | 105 | 105 | 105 | 105 | 105 | 2500 | 100 | 2040 | 60 | 94 |
| Residual monomer content (parts by mass) based on 100 parts by mass of resin | | | | 0.20 | 0.18 | 0.18 | 0.18 | 0.18 | 0.18 | 5.00 | 0.20 | 6.80 | 0.20 | 0.24 |
| Acrylic resin content (mass%) of ink composition based on total resin mass | | | | 20% | 83% | 83% | 83% | 83% | 83% | 100% | 100% | 0% | 0% | 0% |
| Evaluation items | | Viscosity stability (heated storage) | | 5 | 5 | 5 | 5 | 5 | 5 | 3 | 5 | 3 | 5 | 5 |
| | | Viscosity stability (heat cycles) | | 5 | 5 | 5 | 5 | 5 | 5 | 1 | 3 | 1 | 3 | 4 |
| | | Ejection stability (heated storage) | | 3 | 5 | 5 | 5 | 5 | 5 | 2 | 5 | 2 | 5 | 5 |
| | | Ejection stability (heat cycles) | | 3 | 5 | 5 | 5 | 5 | 5 | 1 | 4 | 1 | 3 | 3 |
| | | Test 1 of adequacy for printer component | | 5 | 5 | 5 | 5 | 5 | 5 | 3 | 5 | 2 | 5 | 5 |
| | | Test 2 of adequacy for printer component | | 5 | 5 | 5 | 4 | 5 | 5 | 3 | 5 | 3 | 5 | 5 |

**[Table 11-1]**

| | | | | | | | | |
|---|---|---|---|---|---|---|---|---|
| | | | | Example 60 | Example 61 | Example 62 | Example 63 | Example 64 |
| Type | | Name | Flash point (°C) | | | | | |
| | Dialkyl ether | Diethylene glycol diethyl ether | 71.0 | 10.0 | 10.0 | 10.0 | 10.0 | 10.0 |
| | | Diethylene glycol methyl ethyl ether | 64.0 | 51.4 | 66.0 | 60.4 | 60.4 | 60.4 |
| | | Dipropylene glycol dimethyl ether | 65.0 | | | | | |
| | | Diethylene glycol dibutyl ether | 117.2 | | | | | |
| | Monoalkyl ether | Dipropylene glycol monomethyl ether | 76.5 | 5.0 | 5.0 | 5.0 | 5.0 | 5.0 |
| | | Diethylene glycol mono-n-butyl ether | 100.0 | | | | | |
| | | Triethylene glycol mono-n-butyl ether | 156.0 | 5.0 | 5.0 | 5.0 | 5.0 | 5.0 |
| | | Tetraethylene glycol monobutyl ether | 166.0 | | | | | |
| | Alkylamide solvent | N,N-diethylformamide | 60.0 | 10.0 | | | | |
| | | N,N-diethylpropionamide | 73.0 | | | | | |
| Solvent | | N,N-diethylacetamide | 78.0 | | | | | |
| | Cyclic amide solvent | N-methyl-*ε*-caprolactam | 103.3 | | | | | |
| | | *ε*-Caprolactam | 125.0 | | | | | |
| | Lactone solvent | *γ*-Butyrolactone | 101.0 | 10.0 | 10.0 | 10.0 | 10.0 | 10.0 |
| | | *γ*-Valerolactone | 120.0 | | | | | |
| | | *ε*-Caprolactone | 115.0 | | | | | |
| | Acetate solvent | 3-methoxybutyl acetate | 62.5 | | | | | |
| | Carbonate ester solvent | Propylene carbonate | 135.0 | | | | | |
| | Oxazolidinone solvent | 3-methyl-2-oxazolidinone | 115.0 | | | | | |
| | Imidazolidinone solvent | 1,3-dimethyl-2-imidazolidinone | 76.5 | | | | | |
| | Alkoxyamide solvent | N,N-dimethyl-*β*-methoxypropionamide | 67.9 | | | | | |
| | | | Residual monomer (ppm) | | | | | |
| | Acrylic resin | Synthetic resin[1] | 500 ppm | | | | | |
| | Acrylic resin | Synthetic resin[2] | 2,000 ppm | | | | | |
| | Acrylic resin | Synthetic resin[3] | 10,000 ppm | | | | | |
| | Acrylic resin | Synthetic resin[4] | 26,000 ppm | | | | | |
| Resin | Acrylic resin | Synthetic resin[5] | 50,000 ppm | | | | | |
| | Acrylic resin | Synthetic resin[6] | 2,300 ppm | | | | | |
| | Acrylic resin | Synthetic resin[7] | 1,900 ppm | | | | | |
| | Acrylic resin | Synthetic resin[15] | 1,800 ppm | | | 5.0 | | |
| | Acrylic resin | Synthetic resin[16] | 2,200 ppm | | | | 5.0 | |
| | Acrylic resin | Synthetic resin[17] | 2,200 ppm | | | | | 5.0 |

**[Table 11-2]**

| | | | | | | | | |
|---|---|---|---|---|---|---|---|---|
| | | | | Example 60 | Example 61 | Example 62 | Example 63 | Example 64 |
| Type | | Name | Residual monomer (ppm) | | | | | |
| | Vinyl chloride-vinyl acetate copolymer resin | Synthetic resin[8] | 500 ppm | | | | | |
| | Vinyl chloride-vinyl acetate copolymer resin | Synthetic resin[9] | 2,000 ppm | 3.0 | 4.0 | | | |
| | Vinyl chloride-vinyl acetate copolymer resin | Synthetic resin[10] | 12,000 ppm | | | | | |
| Resin | Vinyl chloride-vinyl acetate copolymer resin | Synthetic resin[11] | 23,000 ppm | | | | | |
| | Vinyl chloride-vinyl acetate copolymer resin | Synthetic resin[12] | 68,000 ppm | | | | | |
| | Polyester resin | Synthetic resin[13] | 3,400 ppm | | | | | |
| | Polyurethane resin | Synthetic resin[14] | 2,900 ppm | 1.0 | | | | |
| | Manufacturer | Product name | | | | | | |
| Dispersant | Lubrizol | Solsperse20000 | | | | | | |
| | | Solsperse33000 | | 1.5 | | 1.5 | 1.5 | 1.5 |
| Surface modifier | Silicone additive | BYK-331 | | 0.1 | | 0.1 | 0.1 | 0.1 |
| | | BYK-313 | | | | | | |
| | C.I. Pigment Yellow 150 | | | | | | | |
| | C.I. Pigment Blue 15:4 | | | 3.0 | | 3.0 | 3.0 | 3.0 |
| | C.I. Pigment Yellow 155 | | | | | | | |
| | C.I. Pigment Red 122 | | | | | | | |
| | C.I. Pigment Orange 43 | | | | | | | |
| | C.I. Pigment Orange 64 | | | | | | | |
| Pigment | C.I. Pigment Orange 71 | | | | | | | |
| | C.I. Pigment Orange 73 | | | | | | | |
| | C.I. Pigment Red 254 | | | | | | | |
| | C.I. Pigment Green 36 | | | | | | | |
| | C.I. Pigment Green 7 | | | | | | | |
| | Carbon black | | | | | | | |
| | Titanium oxide | | | | | | | |
| Total | | | | 100.0 | 100.0 | 100.0 | 100.0 | 100.0 |
| Residual monomer content based on total mass of ink composition(ppm) | | | | 89 | 80 | 90 | 110 | 110 |
| Residual monomer content (parts by mass) based on 100 parts by mass of resin | | | | 0.22 | 0.20 | 0.18 | 0.22 | 0.22 |
| Acrylic resin content (mass%) of ink composition based on total resin mass | | | | 0% | 0% | 100% | 100% | 100% |
| Evaluation items | | Viscosity stability (heated storage) | | 5 | 5 | 5 | 5 | 5 |
| | | Viscosity stability (heat cycles) | | 4 | 5 | 3 | 3 | 3 |
| | | Ejection stability (heated storage) | | 5 | 5 | 5 | 5 | 5 |
| | | Ejection stability (heat cycles) | | 3 | 4 | 4 | 4 | 4 |
| | | Test 1 of adequacy for printer component | | 5 | 4 | 5 | 5 | 5 |
| | | Test 2 of adequacy for printer component | | 5 | 4 | 5 | 5 | 5 |

The tables indicate that the ink compositions having a resin-derived residual monomer content of at most 2,000 ppm based on their total mass have high ejection stability after heated storage and after heat cycle storage and also have high adequacy for injekt head components.

In particular, among the ink compositions of Examples 1 to 11 with different resin-derived residual monomer components, those of Examples 1 to 7, which have a resin-derived residual monomer content of at most 1,000 ppm based on their total mass, have higher ejection stability after heated storage and after heat cycle storage and have higher adequacy for inkjet head components than those of Examples 8 to 10.

The ink compositions of Examples 23 to 27, which contain the alkylamide solvent or the cyclic amide solvent instead of γ-butyrolactone in Example 1, and the ink compositions of Examples 28 and 29, which contain a lactone solvent other than γ-butyrolactone, also have higher ejection stability after heated storage and after heat cycle storage and have higher adequacy for inkjet head components. The ink compositions of Examples 52 to 54, where the γ-butyrolactone content differs from that in Example 1, and the ink compositions of Examples 55 and 56, where the N,N-diethylformamide content differs from that in Example 23, also have ejection stability as high as that of Example 1 or Example 23 after heated storage and after heat cycle storage and also have adequacy as high as that of Example 1 or Example 23 for inkjet heat components.

The ink compositions of Examples 35 to 45, which contain a pigment other than C.I. Pigment Blue 15:4 in Example 1, also have ejection stability as high as that of Example 1 and also have adequacy as high as that of Example 1 for inkjet head components.

Among the ink compositions of Examples 1 to 7 and 47 to 51, which contain the acrylic resin and the vinyl chloride-vinyl acetate copolymer resin each at different concentrations, those of Examples 1 to 7 and 46 to 49, where the acrylic resin content is 30 mass% or more and 100 mass% or less based on the total resin mass, have higher ejection stability than that of Example 50 after heated storage and after heat cycle storage.

Even the ink compositions of Examples 58 to 61, which contain no acrylic resin but contain the vinyl chloride-vinyl acetate copolymer resin, have high ejection stability after heated storage and after heat cycle storage and have high adequacy for inkjet head components because their resin-derived residual monomer content is controlled to fall within the range of 2,000 ppm or less based on their total mass.

On the other hand, the ink compositions of Comparative Examples 1 to 7, which have a resin-derived residual monomer content of more than 2,000 ppm based on their total mass, have low ejection stability after heated storage and after heat cycle storage and have not good adequacy for inkjet head components.

## Claims

1. An ink composition that is ejected by an ink-jet method comprising: a resin; and an organic solvent,
wherein the resin comprises at least one of an acrylic resin or
a vinyl chloride-vinyl acetate copolymer resin, and
wherein the content of a residual monomer derived from the resin is 2,000 ppm or less based on the total mass of the ink composition.

2. The ink composition according to claim 1, wherein the resin further comprises at least one polymer or copolymer selected from the group consisting of a vinyl chloride resin, a vinyl acetate resin, a polyester resin, and a polyurethane resin.

3. The ink composition according to claim 1 or 2,
wherein the resin comprises an acrylic resin, and
wherein the content of the acrylic resin is in a range of 30 mass% or more and 100 mass% or less based on the total mass of the resin in the ink composition.

4. The ink composition according to any one of claims 1 to 3, wherein the content of the resin is in a range of 1.0 mass% or more and 20.0 mass% or less based on the total mass of the ink composition.

5. The ink composition according to any one of claims 1 to 4, wherein the resin has a weight average molecular weight Mw of 10,000 or more and 60,000 or less.

6. The ink composition according to any one of claims 1 to 5, wherein the organic solvent comprises a glycol ether solvent of Formula (1):
Rₐ-(-O-R_{b})ₙ-O-R_{c} (1)
wherein Rₐ and R_{c} are each independently hydrogen or an optionally branched alkyl group having 1 or more and 8 or less carbon atoms, R_{b} is an optionally branched alkylene group having 1 or more and 4 or less carbon atoms, and
n is an integer of 1 or more and 6 or less.

7. The ink composition according to claim 6, wherein the glycol ether solvent comprises a glycol monoalkyl ether of Formula (2):
R_{d}-(-O-Rₑ)ₙ-O-H (2)
wherein R_{d} is an optionally branched alkyl group having 1 or more and 8 or less carbon atoms, Rₑ is an optionally branched alkylene group having 1 or more and 4 or less carbon atoms, and
n is an integer of 1 or more and 6 or less.

8. The ink composition according to claim 6 or 7, wherein the glycol ether solvent comprises a glycol dialkyl ether of Formula (3) :
R_{f}-(-O-R_{g})ₙ-O-Rₕ (3)
wherein R_{f} and Rₕ are each independently an optionally branched alkyl group having 1 or more and 8 or less carbon atoms, R_{g} is an optionally branched alkylene group having 1 or more and 4 or less carbon atoms, and
n is an integer of 1 or more and 6 or less.

9. The ink composition according to any one of claims 1 to 8, wherein the organic solvent comprises a solvent of Formula (4): 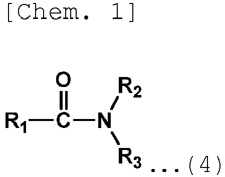 wherein R₁ is hydrogen or an alkyl group having 1 or more and 4 or less carbon atoms, and R₂ and R₃ are each independently hydrogen or an alkyl group having 1 or more and 4 or less carbon atoms.

10. The ink composition according to any one of claims 1 to 9, wherein the organic solvent comprises a solvent of Formula (5): 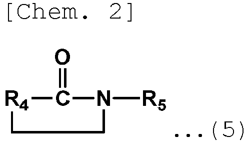 wherein R₄ is an alkylene group having 3 or more and 5 or less carbon atoms, and R₅ is hydrogen, an alkyl group having 1 or more and 4 or less carbon atoms, or an unsaturated hydrocarbon group.

11. The ink composition according to any one of claims 1 to 10, wherein the organic solvent comprises a solvent of Formula (6): 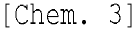 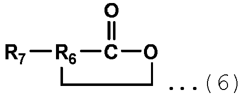 wherein R₆ is an alkylene group having 3 or more and 5 or less carbon atoms, and R₇ is hydrogen or an alkyl group having 1 or more and 4 or less carbon atoms.

12. The ink composition according to any one of claims 1 to 11, wherein the organic solvent comprises a solvent of Formula (7): 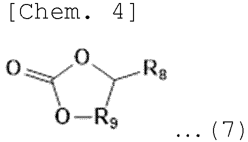 wherein R₈ is hydrogen or an alkyl group having 1 or more and 4 or less carbon atoms, and R₉ is an alkylene group having 1 or more and 3 or less carbon atoms.

13. The ink composition according to any one of claims 1 to 12, wherein the organic solvent comprises a solvent of Formula (8): 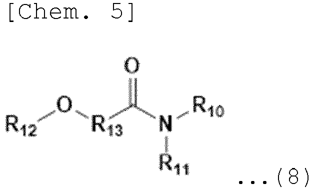 wherein R₁₀, R₁₁, and R₁₂ are each independently hydrogen or an alkyl group having 1 or more and 4 or less carbon atoms, and R₁₃ is an alkylene group having 1 or more and 4 or less carbon atoms.

14. An ink set comprising the ink composition according to any one of claims 1 to 13.

15. A recording method comprising ejecting the ink composition according to any one of claims 1 to 13 onto a substrate.

16. A method for producing a recorded product, the method comprising ejecting the ink composition according to any one of claims 1 to 13 onto a substrate.

17. A device comprising an ink ejection unit that contains the ink composition according to any one of claims 1 to 13 and ejects the ink composition according to any one of claims 1 to 13 onto a substrate.

18. A recorded product comprising:
a substrate; and
an ink composition layer provided on the substrate,
the ink composition layer comprising a resin and a residual monomer derived from the resin,
the resin comprising at least one of an acrylic resin or a vinyl chloride-vinyl acetate copolymer resin,
the ink composition layer having a content of the residual monomer of 4.0 parts by mass or less based on 100 parts by mass of the resin.
